(19) **Europäisches Patentamt / European Patent Office / Office européen des brevets**

(11) **EP 2 125 476 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(51) Int Cl.:
**B61D 15/06** *(2006.01)*     **B61G 11/16** *(2006.01)*
**F16F 7/12** *(2006.01)*

(21) Anmeldenummer: **07821479.8**

(22) Anmeldetag: **17.10.2007**

(86) Internationale Anmeldenummer:
**PCT/EP2007/061114**

(87) Internationale Veröffentlichungsnummer:
**WO 2008/046873 (24.04.2008 Gazette 2008/17)**

(54) **ENERGIEVERZEHREINRICHTUNG FÜR MEHRGLIEDRIGE FAHRZEUGE**

ENERGY ABSORPTION DEVICE FOR MULTI-SECTION VEHICLES

DISPOSITIF D'ABSORPTION D'ÉNERGIE POUR VÉHICULES COMPOSÉS DE PLUSIEURS UNITÉS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.10.2006 EP 06122601**
**23.11.2006 EP 06124641**

(43) Veröffentlichungstag der Anmeldung:
**02.12.2009 Patentblatt 2009/49**

(73) Patentinhaber: **Voith Patent GmbH**
**89522 Heidenheim (DE)**

(72) Erfinder: **JÄDE, Eckart**
**38106 Braunschweig (DE)**

(74) Vertreter: **Meissner, Bolte & Partner**
**Anwaltssozietät GbR**
**Postfach 86 06 24**
**81633 München (DE)**

(56) Entgegenhaltungen:
**EP-A- 0 826 569     EP-A- 1 234 729**
**FR-A- 2 869 263     FR-A- 2 879 549**
**US-A- 3 577 621     US-A- 4 272 114**

**Beschreibung**

Die vorliegende Erfindung betrifft eine Energieverzehrvorrichtung für mehrgliedrige Fahrzeuge, insbesondere Schienenfahrzeuge, wobei die Energieverzehrvorrichtung eine erste Stirnplatte, eine zweite Stirnplatte und ein sich in Längsrichtung der Energieverzehrvorrichtung erstreckendes und zwischen der ersten und der zweiten Stirnplatte angeordnetes Energieverzehrelement in Gestalt eines Hohlkörpers aufweist, und wobei zur Vorgabe der Faltenbildung des Energieverzehrelements beim Ansprechen der Energieverzehrvorrichtung das Energieverzehrelement ferner eine Ansprechtriggerung in Gestalt eines sich in Umlaufrichtung zumindest teilweise um den Umfang des als Hohlkörper ausgebildeten Energieverzehrelements erstreckenden Falt- bzw. Beulbereichs aufweist. Die Erfindung betrifft des weiteren ein Verfahren zur Herstellung einer derartigen Energieverzehrvorrichtung.

Energieverzehrvorrichtungen der eingangs genannten Art sind dem Prinzip nach allgemein aus dem Stand der Technik bekannt und werden beispielsweise in der Schienenfahrzeugtechnik insbesondere als Stoßsicherung eingesetzt. In der Regel besteht eine solche Stoßsicherung aus einer Kombination einer Zug-/Stoßeinrichtung (beispielsweise in Gestalt eines Federapparats) und einer Energieverzehrvorrichtung, und dient dazu, das Fahrzeug insbesondere auch bei größeren Auffahrgeschwindigkeiten zu schützen. Üblicher Weise ist dabei vorgesehen, dass die Zug-/Stoßeinrichtung Zug- und Stoßkräfte bis zu einer definierten Größe aufnimmt und darüber hinausgehende Kräfte in das Fahrzeuguntergestell weiterleitet.

Dadurch werden zwar Zug- und Stoßkräfte, welche während des normalen Fahrbetriebes bei einem mehrgliedrigen Schienenfahrzeug beispielsweise zwischen den einzelnen Wagenkästen auftreten, in dieser in der Regel regenerativ ausgebildeten Stoßsicherung absorbiert.

Bei Überschreiten der Betriebslast der in der Regel regenerativ ausgebildeten Zug-/Stoßeinrichtung hingegen, wie etwa beim Aufprall des Fahrzeuges auf ein Hindernis oder beim abrupten Abbremsen des Fahrzeuges, wird die Zug-/Stoßeinrichtung und die gegebenenfalls vorgesehene Gelenk- oder Kupplungsverbindung zwischen den einzelnen Wagenkästen bzw. die Schnittstelle zwischen den einzelnen Wagenkästen möglicherweise zerstört oder beschädigt. In jedem Fall reicht die Zug-/Stoßeinrichtung nicht für einen Verzehr der insgesamt anfallenden Energie aus. Dadurch ist die Zug-/Stoßeinrichtung dann nicht mehr in das Energieverzehrkonzept des Gesamtfahrzeuges eingebunden, so dass - sofern keine zusätzliche Energieverzehrvorrichtung vorgesehen ist - die anfallende Stoßenergie direkt auf das Fahrzeuguntergestell übertragen wird. Dabei wird dieses extremen Belastungen ausgesetzt und unter Umständen beschädigt oder gar zerstört. Bei Schienenfahrzeugen läuft in solch einem Fall der Wagenkasten Gefahr, zu entgleisen.

Mit dem Ziel, das Fahrzeuguntergestell gegen Beschädigungen bei starken Auffahrstößen zu schützen, kommt als zusätzliche Energieverzehrvorrichtung häufig ein destruktiv oder regenerativ ausgebildetes Energieverzehrelement zum Einsatz, welches beispielsweise derart ausgelegt ist, dass es nach Ausschöpfung des Arbeitsverzehrs der Zug-/Stoßeinrichtung anspricht und die durch den Kraftfluss über das Energieverzehrelement übertragene Energie zumindest teilweise absorbiert und somit abbaut. Als Energieverzehrelemente kommen insbesondere Verformungskörper in Frage, bei denen nach Überschreiten einer kritischen Druckkraft durch eine (gewollte) plastische Verformung in destruktiver Weise die Stoßenergie in Verformungsarbeit und Wärme umgewandelt wird.

Ein Energieverzehrelement, in welchem zur Umwandlung der Stoßenergie ein Verformungsrohr verwendet wird, weist eine im wesentlichen rechteckig verlaufende Kennlinie auf, wodurch nach dem Ansprechen des Energieverzehrelements eine maximale Energieaufnahme sichergestellt ist.

Allerdings ist es derzeit häufig nicht möglich, eine Energieveizehrvorrichtung, in welcher ein destruktiv ausgebildetes Energieverzehrelement - beispielsweise in Gestalt eines Verformungsrohres - zum Einsatz kommt, an bestimmte Anwendungen insbesondere im Hinblick auf das Ansprechverhalten der Energieverzehrvorrichtung mit hinreichender Genauigkeit anzupassen. Hierzu wäre es erforderlich, das Ansprechverhalten und die Kraft-Weg-Kennlinie der Energieverzehrvorrichtung entsprechend auszulegen sowie den Ereignisablauf beim Energieverzehr vorab festzulegen, um einen vorhersehbaren, definierten Energieverzehr zu ermöglichen.

Aus der WO 00/05 119 A1 ist eine Energieverzehrvorrichtung der eingangs genannten Art bekannt, bei welcher zwischen einem ersten und einem zweiten Flansch (Stirnplatte) ein Verbindungskörper in Gestalt eines sich in Längsrichtung der Energieverzehrvorrichtung erstreckenden kastenartigen Körpers angeordnet ist. Dieser kastenartige Körper übernimmt die Funktion eines Deformationskörpers, der bei Überschreiten einer charakteristischen Auslösekraft seine Kraftübertragungsfunktion durch axialen Faltenkollaps verliert. Das Kollabieren des kastenartigen Verbindungskörpers erfolgt, indem die jeweils benachbarten Seiten des kastenartigen Verbindungskörpers abwechselnd nach innen oder außen ein- bzw. ausgestülpt werden.

Des weitern ist bei der bekannten Energieverzehrvorrichtung eine Triggerung zur Vorgabe der Faltenbildung des kastenartigen Verbindungskörpers beim Ansprechen der Energieverzehrvorrichtung vorgesehen. Bei dieser Ansprechtriggerung sind an denjenigen Stellen, an welchen beim Ansprechen der Energieverzehrvorrichtung die ersten Falten entstehen sollen, geometrische Imperfektionen in Gestalt von konstruktionsbedingten Abkantungen vorgesehen.

Durch das Vorsehen einer derartigen Ansprechtriggerung wird somit eine Energieverzehrvorrichtung bereitgestellt, mit der im Crashfall, d.h. nach Ansprechen der Energieverzehrvorrichtung, der Ereignisablauf des Energieverzehrs nach einem vorab festlegbaren Muster abläuft. Allerdings weist die vorstehend beschriebene und aus der WO 00/05 119 A1 bekannte Energieverzehrvorrichtung den Nachteil auf, dass zur Herstellung des kastenartigen Verbindungskörpers, welcher als Energieverzehrelement dient, die einzelnen Bleche, welche im zusammengebauten Zustand die Wandung des Verbindungskörpers bilden, vorab, d.h. vor dem für das Ausbilden des kastenartigen Verbindungskörpers notwendigen Verschweißen der Einzelbleche, relativ aufwendig bearbeitet werden müssen. Insbesondere ist es erforderlich, an jedem Einzelblech zuvor festgelegte Endstücke über eine genaue Biegelinie um einen bestimmten Winkel abzukanten, damit beim Ansprechen der Energieverzehrvorrichtung die Abkantung tatsächlich als Triggerung zur Vorgabe der Faltenbildung des Verbindungskörpers dienen kann.

Insbesondere ist bei der aus dem Stand der Technik bekannten Lösung nicht auszuschließen, dass sich gegebenenfalls bei der Fertigung des kastenartigen Verbindungskörpers auftretende Ungenauigkeiten - beispielsweise im Hinblick auf die Biegelinie, über welche die Endstücke abzukanten sind, oder im Hinblick auf den Winkel, um welchen die Endstücke abgekantet werden müssen - negativ auf das Ansprechverhalten des Energieverzehrelements auswirken können.

Ein weiterer Nachteil bei der bekannten Lösung ist darin zu sehen, dass durch das Vorsehen der Ansprechtriggerung in Gestalt einer konstruktionsbedingten Abkantung die Energieverzehrvorrichtung nicht oder zumindest nur bedingt für die Übertragung von im normalen Fahrbetrieb auftretenden Zugkräften ausgelegt ist. Derartige Zugkräfte würden den als Ansprechtriggerung vorgesehenen Faltbereich beeinflussen, infolgedessen das Ansprechverhalten der Energieverzehrvorrichtung nicht mehr vorab genau festlegbar wäre.

Demnach liegt der vorliegenden Erfindung die Aufgabe zugrunde, eine Energieverzehrvorrichtung mit einem destruktiv arbeitenden Energieverzehrelement der eingangs genannten Art dahingehend weiterzuentwickeln, dass die Energieverzehrvorrichtung sowohl für die Übertragung von Druckkräften als auch für die Übertragung von Zugkräften eingesetzt und somit beispielsweise einer Gelenk- oder Kupplungsanordnung eines mehrgliedrigen Schienenfahrzeuges nachgeschaltet werden kann. Dabei sollen ferner sowohl die Ansprechkraft zum Auslösen des Energieverzehrs als auch der Ereignisablauf beim Energieverzehr genau einstellbar sein, wobei gleichzeitig die Energieverzehrvorrichtung einen möglichst einfach und kostengünstig herzustellenden Aufbau aufweisen soll. Ferner liegt der vorliegenden Erfindung die Aufgabe zugrunde, ein Verfahren zur Herstellung einer derartigen Energieverzehrvorrichtung anzugeben.

Im Hinblick auf die Energieverzehrvorrichtung wird die zugrunde liegende Aufgabe erfindungsgemäß dadurch gelöst, dass die Energieverzehrvorrichtung der eingangs genannten Art ferner zumindest ein Zugkraft-Übertragungselement aufweist, welches die erste Stirnplatte mit der zweiten Stirnplatte verbindet und ausgelegt ist, Zugkräfte in Längsrichtung der Energieverzehrvorrichtung zu übertragen, wobei die Wirkungslinie der über das zumindest eine Zugkraft-Übertragungselement übertragenen Zugkraft vollständig, also über die gesamte Länge des Zugkraft-Übertragungselements, im Inneren des Zugkraft-Übertragungselements verläuft.

Die erfindungsgemäße Lösung weist eine Reihe wesentlicher Vorteile auf, auf welche nachfolgend eingegangen werden soll. So ist durch das Vorsehen der Ansprechtriggerung zur Vorgabe der Faltenbildung des als Hohlkörper ausgebildeten Energieverzehrelements der Ereignisablauf beim Energieverzehr, d.h. die plastische Deformation des Energieverzehrelements nach Ansprechen der Energieverzehrvorrichtung, vorab genau einstellbar. Indem nämlich in der Wandung des als Hohlkörper ausgebildeten Energieverzehrelements eine geometrische Imperfektion in Gestalt eines Falt- bzw. Beulbereiches eingebracht wird, kann erreicht werden, dass die Position, Ausrichtung sowie die Bildung der ersten Falte bei dem während des Energieverzehrs stattfindenden axialen Faltenkollaps des als Hohlkörper ausgebildeten Energieverzehrelements wesentlich weniger stark von Materialunregelmäßigkeiten im Energieverzehrelement abhängen, als dies der Fall wäre, wenn die Energieverzehrvorrichtung keine derartige Ansprechtriggerung aufweisen würde.

Andererseits ist die Energieverzehrvorrichtung erfindungsgemäß mit einem zusätzlichen Zugkraft-Übertragungselement versehen, welches in erster Linie dazu dient, die während des normalen Fahrbetriebs auftretenden Zugkräfte in Längsrichtung der Energieverzehrvorrichtung zu übertragen. Damit kann erreicht werden, dass der Anteil der zu übertragenen Zugkräfte, welcher durch die Wandung des als Hohlkörper ausgebildeten Energieverzehrelements läuft, hinreichend reduziert ist, so dass der als Ansprechtriggerung vorgesehene Falt- bzw. Beulbereich nicht verändert wird und somit auch das Ansprechverhalten der Energieverzehrvorrichtung im Crashfall, d.h. bei der Übertragung von übermäßigen Stoßkräften, nicht beeinflusst wird. Wesentlich ist dabei, dass das zumindest eine Zugkraft-Übertragungselement vollständig auf einer die erste Stirnplatte mit der zweiten Stirnplatte verbindenden Verbindungsgeraden liegt, so dass die Wirkungslinie der über das Zugkraft-Übertragungselement übertragenen Zugkraft vollständig im Inneren des Zugkraft-Übertragungselements verläuft. Mit dieser Maßnahme ist das Zugkraft-Übertragungselement ausgelegt, Zugkräfte zu übertragen, ohne dass sich das Energieverzehrelement mit dem als Ansprechtriggerung vorgesehenen Falt- bzw. Beulbereiches aufgrund des durch die Wandung des als Hohlkörper ausgebildeten Energieverzehrelements laufenden Zugkraftanteils verlängert. Demnach erhöht das zumindest eine Zugkraft-Übertragungselement die Zugfestigkeit der gesamten Energieverzehrvorrichtung, so dass über die Energieverzehrvorrichtung auch erhöhte Zugkräfte übertragen werden können.

Als Zugkraft-Übertragungselement kommen unterschiedliche Bauteile in Frage, die aus einem festen Material gebildet sind und eine hinreichende und vorzugsweise bekannte

Zugfestigkeit aufweisen. Insbesondere sind als Zugkraft-Übertragungselemente Stäbe, Stangen, Seile oder Bänder etc. denkbar. Die Verwendung eines als Seil oder Kette ausgebildeten Zugkraft-Übertragungselements zeichnet sich insbesondere dadurch aus, dass dieses Zugkraft-Übertragungselement nur zur Übertragung von Zugkräften in Längsrichtung der Energieverzehrvorrichtung ausgelegt ist, während Stoßkräfte nicht übertragen werden können. In solch einem Fall laufen die Stoßkräfte vollständig durch das als Hohlkörper ausgebildete Energieverzehrelement.

Zur Herstellung einer derartigen Energieverzehrvorrichtung ist erfindungsgemäß ein Verfahren vorgesehen, welches die folgenden Verfahrensschritte aufweist: zunächst wird ein Hohlkörper mit einer gekanteten, insbesondere pyramidenstumpfartigen Formgebung bereitgestellt. Anschließend wird eine erste Stirnplatte an einer ersten Stirnseite des Hohlkörpers und eine zweite Stirnplatte an einer gegenüberliegenden zweiten Stirnseite des Hohlkörpers befestigt. Danach wird in der Wandung des Hohlkörpers ein sich in Umlaufrichtung zumindest teilweise um den Umfang des Hohlkörpers erstreckender Falt- bzw. Beulbereich ausgebildet, welcher bei der fertig gestellten Energieverzehrvorrichtung die Ansprechtriggerung begründet. Schließlich wird zumindest ein Zugkraft-Übertragungselement sowohl an der ersten Stirnplatte als auch an der zweiten Stirnplatte derart befestigt, dass das zumindest eine Zugkraft-Übertragungselement über seine gesamte Länge vollständig auf einer die erste Stirnplatte mit der zweiten Stirnplatte verbindenden Verbindungsgeraden liegt.

Hierbei handelt es sich um ein besonders leicht zu realisierendes Verfahren zur Herstellung der erfindungsgemäßen Energieverzehrvorrichtung, welche sich insbesondere dadurch auszeichnet, dass der sich in Umlaufrichtung zumindest teilweise um den Umfang des Hohlkörpers erstreckende Falt- bzw. Beulbereich erst nach der Herstellung des Hohlkörpers ausgebildet wird. Somit ist es nicht erforderlich, den Prozessablauf bei der Herstellung des Hohlkörpers umzustellen, da es nicht notwendig ist, bereits vor dem Zusammenbau des Hohlkörpers die einzelnen die Wandung des Hohlkörpers ausbildenden Blechen mit geometrischen Imperfektionen (Abkantungen etc.) zu versehen. Vielmehr wird erfindungsgemäß der Falt- bzw. Beulbereich erst dann in der Wandung des Hohlkörpers ausgebildet, nachdem der Hohlkörper als solcher bereits gefertigt und die Stirnplatten an den jeweiligen Stirnseiten des Hohlkörpers befestigt wurden.

Vorteilhafte Weiterbildungen der erfindungsgemäßen Lösung sind in den Unteransprüchen angegeben.

So ist bei einer bevorzugten Weiterbildung der erfindungsgemäßen Energieverzehrvorrichtung im Hinblick auf das zumindest eine Zugkraft-Übertragungselement, welches zur Erhöhung der Zugfestigkeit der Energieverzehrvorrichtung zum Einsatz kommt, vorgesehen, dass dieses eine vorab festlegbare Biegesteifigkeit aufweist.

Unter dem hier verwendeten Begriff "Biegesteifigkeit" ist allgemein eine aus der technischen Mechanik bekannte Größe zu verstehen, die den Zusammenhang zwischen einer auf das Zugkraft-Übertragungselement einwirkenden Last und die aufgrund dieser Last bewirkte elastische Verformung des Zugkraft-Übertragungselements beschreibt. Die Biegesteifigkeit des Zugkraft-Übertragungselements ist von der Form, der Geometrie und dem Material des Übertragungselementes abhängig. Im Einzelnen stellt die Biegesteifigkeit des Zugkraft-Übertragungselements das Produkt aus dem Elastizitätsmodul des für das Übertragungselement verwendeten Materials und dem Flächenmoment zweiten Grades des Querschnittes des Zugkraft-Übertragungselements dar. Das Flächenmoment zweiten Grades hängt dabei wesentlich von der Form des Querschnittes ab.

Da bei der bevorzugten Weiterentwicklung das zumindest eine Zugkraft-Übertragungselement eine vorab festlegbare Biegesteifigkeit aufweist, ist auch die für das Zugkraft-Übertragungselement charakteristische Knicklast bekannt. Hierbei handelt es sich um die kritische Kraft, bei welcher das Zugkraft-Übertragungselement bei einer Druckkraftübertragung durch seitliches Ausweichen (von der Verbindungsgeraden) seine Stabilität verliert und als Kraftübertragungselement versagt. Indem beispielsweise das Material und/oder die Querschnittsformgebung des Zugkraft-Übertragungselements entsprechend gewählt wird, kann auf diese Weise die für das Zugkraft-Übertragungselement charakteristische Knicklast vorab festgelegt werden. Dies ist insbesondere im Hinblick auf die Festlegung der für die Energieverzehrvorrichtung charakteristischen Ansprechkraft von Vorteil. Wird nämlich als Zugkraft-Übertragungselement beispielsweise ein stab-, stangen- oder bandförmiges Element aus einem festen Material eingesetzt, ist zu berücksichtigen, dass dieses Zugkraft-Übertragungselement nicht nur dahingehend ausgelegt ist, Zugkräfte zu übertragen und somit die Zugfestigkeit der gesamten Energieverzehrvorrichtung zu erhöhen, sondern auch eine gewisse Druckfestigkeit aufweist, so dass die von der Energieverzehrvorrichtung übertragenen Druckkräfte teilweise auch durch das Zugkraft-Übertragungselement laufen. In solch einem Fall ist es erforderlich, dass der Anteil der bei der Druckkraftübertragung durch das Zugkraft-Übertragungselement läuft, vorab bekannt ist, um das Ansprechverhalten des als Hohlkörper ausgebildeten Energieverzehrelements möglichst genau vorhersagen und vorab festlegen zu können.

Damit der bei einer Druckkraftübertragung durch das Zugkraft-Übertragungselement übertragene Kraftanteil möglichst gering ist, sollte vorzugsweise das Zugkraft-Übertragungselement einen im Vergleich zu der Wandung des als Hohlkörper ausgebildeten Energieverzehrelements geringen Querschnitt aufweisen.

Wie bereits angedeutet, ist es grundsätzlich bevorzugt, wenn auch die Zugfestigkeit des zumindest einen Zugkraft-Übertragungselements durch eine geeignete Materialwahl und eine geeignete Wahl der Querschnittsgröße des Zugkraft-Übertragungselements einstellbar und somit bekannt ist. Damit ist es möglich, vorab die maximale Zugkraft anzugeben, welche mit der Energieverzehrvorrichtung übertragen werden kann. Auf diese Weise kann die Energieverzehrvorrichtung optimal an den jeweiligen Anwendungsfall angepasst werden. Die Zugfestigkeit ist die Spannung, die im Zugversuch aus der maximal erreichten Zugkraft bezogen auf den ursprünglichen Querschnitt des Zugkraft-Übertragungselements errechnet wird.

In einer besonders bevorzugten Realisierung der erfindungsgemäßen Lösung kommen zumindest zwei Zugkraft-Übertragungselemente zum Einsatz, welche sich jeweils entlang von verschiedenen Verbindungsgeraden erstrecken, wobei die Resultierende der Verbindungsgeraden mit der Längsachse der Energieverzehrvorrichtung übereinstimmt. Dies hat den Vorteil, dass bei der Übertragung von Zugkräften über die zumindest zwei Zugkraft-Übertragungselemente keine Spannungsspitzen auftreten können, und insbesondere auch die über die Energieverzehrvorrichtung zu übertragenen Zugkräfte gleichmäßig über den Querschnitt der Energieverzehrvorrichtung verteilt weitergeleitet werden. Mit dieser Maßnahme kann auch bei der Übertragung erhöhter Zugkräften wirkungsvoll eine Verformung (Streckung) des als Hohlkörper ausgeführten Energieverzehrelements mit dem in der Wandung des Hohlkörpers integrierten Falt- bzw. Beulbereiches verhindert werden.

Besonders bevorzugt ist in einer Weiterentwicklung der in der erfindungsgemäß vorgeschlagenen Energieverzehrvorrichtung zum Einsatz kommenden Zugkraft-Übertragungselemente vorgesehen, dass diese sich entlang von Verbindungsgeraden erstrecken, welche schräg zur Längsachse der Energieverzehrvorrichtung verlaufen. Im Extremfall ist es somit denkbar, dass die einzelnen Zugkraft-Übertragungselemente diagonal von der einen Seite des als Hohlkörper ausgebildeten Energieverzehrelements zu der gegenüberliegenden anderen Seite verlaufen. Die im Vergleich zu der Längsachse der Energieverzehrvorrichtung schräge Anordnung der Zugkraft-Übertragungselemente hat eine Auswirkung auf die charakteristische Knicklast, bei welcher das Zugkraft-Übertragungselement bei Druckkraftübertragung durch seitliches Ausweichen seine Stabilität verliert und als Kraftübertragungselement versagt.

Hierbei wird die Erkenntnis ausgenutzt, dass die für das Zugkraft-Übertragungselement charakteristische Knicklast unter anderem auch von der Art der Druckkraftbeanspruchung abhängt, d.h. von der Art der Druckkrafteinleitung in das Zugkraft-Übertragungselement und dem Verlauf der Druckkräfte über die Länge des Zugkraft-Übertragungselements. Nach der Stabilitätstheorie kann die charakteristische Knicklast $F_K$ mit der nachfolgend angegebenen Formel berechnet werden:

$$F_K = \frac{\pi^2 EI}{s^2} \qquad \text{(Formel 1)}$$

In Formel 1 bezeichnet E das Elastizitätsmodul des für das Zugkraft-Übertragungselement verwendeten Materials, I das axiale Flächenträgheitsmoment des Querschnittes des Zugkraft-Übertragungselements und s die sogenannte Knicklänge, die mit der Länge L des Zugkraft-Übertragungselements in folgender Beziehung steht:

$$s = \beta \cdot L \qquad \text{(Formel 2)}$$

In Formel 2 bezeichnet β den sogenannten Knickbeiwert, mit dem der Einfluss der Art der Druckkraftbeanspruchung auf die charakteristische Knicklast berücksichtigt wird. Dabei hängt der Knickbeiwert insbesondere auch davon ab, unter welchem Winkel die Verbindungsgerade des Zugkraft-Übertragungselements relativ zu der Längsachse der Energieverzehrvorrichtung verläuft.

Wenn somit das zumindest eine Zugkraft-Übertragungselement unter einem nichtrechtwinkligen Winkel bzw. nicht-orthogonal an seinen Enden mit den entsprechenden Stirnplatten der Energieverzehrvorrichtung verbunden ist, ändert sich der bei der Berechnung der charakteristischen Knickkraft heranzuziehende Knicklängenbeiwert, so dass trotz konstantem Elastizitätsmodul die für das Zugkraft-Übertragungselement charakteristische Knickkraft abnimmt. Ein Zugkraft-Übertragungselement, welches sich entlang einer schräg zur Längsachse der Energieverzehrvorrichtung verlaufenden Verbindungsgeraden erstreckt, kann somit trotz einer hohen Zugfestigkeit eine relativ geringe Biegesteifigkeit aufweisen.

Der Vorteil einer relativ zu der Längsachse der Energieverzehrvorrichtung schrägen Anordnung der Zugkraft-Übertragungselemente ist somit darin zu sehen, dass bei gleich bleibender Zugfestigkeit die Biegesteifigkeit des Zugkraft-Übertragungselements reduziert werden kann, so dass bei der Druckkraftübertragung im Vergleich zu dem als Hohlkörper ausgebildeten Energieverzehrelement nur ein geringer Druckkraftanteil durch das Zugkraft-Übertragungselement läuft.

Grundsätzlich sollte bei der erfindungsgemäßen Energieverzehrvorrichtung in vorteilhafter Weise das als Hohlkörper ausgebildete Energieverzehrelement ausgelegt sein, bis zu einem durch den Kraftfluss über den Hohlkörper übertragenen, vorab festlegbaren Energiebetrag Druckkräfte in Längsrichtung der Energieverzehrvorrichtung zu übertragen. Dabei sollte die Wirkungslinie der über das Energieverzehrelement übertragenen Druckkräfte - mit Ausnahme in dem Falt- bzw. Beulbereich - vollständig innerhalb der Wandung des als Hohlkörper ausgebildeten Energieverzehrelements verlaufen. Dann nämlich ist sichergestellt, dass der Falt- bzw. Beulbereich, welcher in Umlaufrichtung zumindest teilweise um den Umfang des Hohlkörpers ausgebildet ist, als einzige geometrische Imperfektion in dem Energieverzehrelement vorgesehen ist, so dass eine genau einstellbare Ansprechtriggerung für die Faltenbildung des Energieverzehrelements bei Überschreiten der für die Energieverzehrvorrichtung charakteristischen Ansprechkraft möglich ist.

Im Hinblick aus das Ansprechverhalten der Energieverzehrvorrichtung und im Hinblick auf den Ereignisablauf beim Energieverzehr ist in einer besonders bevorzugten Realisierung der erfindungsgemäßen Lösung vorgesehen, dass das als Hohlkörper ausgebildete Energieverzehrelement eine sich verjüngende Formgebung, und vorzugsweise eine sich von der ersten Stirnplatte in Richtung zur zweiten Stirnplatte verjüngende Formgebung aufweist. Diese konische Ausgestaltung hat den Vorteil einer erhöhten Stabilität des Hohlkörpers gegenüber seitlichen Kräften und Momenten und gegenüber exzentrischen Längskräften. In diesem Zusammenhang wäre es beispielsweise denkbar, dass der Hohlkörper eine gekantete Formgebung, wie zum Beispiel eine pyramidenstumpfartige Formgebung aufweist.

Bei der zuletzt beschriebenen Realisierung der erfindungsgemäßen Lösung, bei welcher der Hohlkörper eine gekantete Formgebung aufweist, ist es von Vorteil, wenn an zumindest einer Kante, und vorzugsweise an jeder Kante des Verbindungskörpers eine Aussparung bzw. ein Blechausschnitt vorgesehen ist, welche bzw. welcher zumindest teilweise in dem Falt- bzw. Beulbereich liegt. Diese Aussparungen bzw. Blechausschnitte an den Kanten des Pyramidestumpfes dienen dazu, dass die Kanten des Hohlkörpers kein natürliches Aussteifen des Energieverzehrelements in dem Falt- bzw. Beulenbereich bewirken können, d.h. in dem Bereich, in welchem beim Ansprechen der Energieverzehrvorrichtung die erste Falte im als Hohlkörper ausgebildeten Energieverzehrelement ausgebildet wird. Beim Ansprechen der Energieverzehrvorrichtung kann sich diese erste Falte somit definiert ausprägen lassen. Weiterhin kann durch das Vorsehen der Aussparungen bzw. Blechausschnitte erreicht werden, dass gegebenenfalls vorhanden Spannungsspitzen der zum Ansprechen der Energieverzehrvorrichtung notwendigen Auslösekraft abgeschwächt werden.

Vorzugsweise ist bei einer Energieverzehrvorrichtung, die gemäß der zuvor beschriebenen Realisierungen der erfindungsgemäßen Lösung einen Hohlkörper mit einer sich verjüngenden Formgebung aufweist, vorgesehen, dass der Falt- bzw. Beulbereich an der verjüngten Seite des Hohlkörpers angeordnet ist, um die für das Auslösen der Energieverzehrvorrichtung charakteristische Ansprechkraft besonders genau einstellen zu können. Die verjüngende Formgebung des Hohlkörpers übernimmt dabei eine sogenannte "Fokussierfunktion", da die bei der Übertragung von Stoßkräften über die Energieverzehrvorrichtung auftretende mechanische Druckspannung am verjüngten Ende des Hohlkörpers am stärksten ausgeprägt ist.

Selbstverständlich sind aber auch andere Anordnungen des Falt- bzw. Beulbereiches im Hinblick auf den Hohlkörper denkbar. Insbesondere kann auch an beiden Enden des Hohlkörpers oder aber auch in der Mitte des Hohlkörpers eine entsprechende Ansprechtriggerung vorgesehen sein.

Schließlich ist im Hinblick auf eine besonders bevorzugte Verwendung der erfindungsgemäßen Energieverzehrvorrichtung vorgesehen, dass die erste Stirnplatte als erster Flansch ausgeführt ist, über welchen die Energieverzehrvorrichtung, vorzugsweise lösbar, am Hauptrahmen eines Wagenkastens eines mehrgliedrigen Fahrzeuges (insbesondere Schienenfahrzeuges) befestigbar ist. Alternativ oder zusätzlich hierzu ist es von Vorteil, wenn auch die zweite Stirnplatte als (zweiter) Flansch ausgeführt ist, über welchen zumindest ein der Energieverzehrvorrichtung vorgeschaltetes Bauteil, wie etwa ein Kraftübertragungselement, ein Pufferelement oder eine zusätzliche Stoßsicherung, vorzugsweise lösbar, mit der Energieverzehrvorrichtung verbindbar ist.

Im Hinblick auf das beanspruchte Verfahren zur Herstellung der erfindungsgemäßen Energieverzehrvorrichtung ist in einer bevorzugten Weiterbildung vorgesehen, dass zum

Ausbilden des sich in Umlaufrichtung zumindest teilweise und den Umfang des Hohlkörpers erstreckenden Falt- bzw. Beulbereiches auf den Hohlkörper eine Druckspannung aufgebracht wird, so dass sich quer zur Beanspruchung in definierter Weise in Umlaufrichtung zumindest teilweise um den Umfang des Hohlkörpers eine Ausbeulung einstellt. Bevorzugt ist dabei, wenn der Betrag der auf den Hohlkörper aufgebrachten Druckspannung derart gewählt wird, dass sich die Ausbeulung mit einer festlegbaren Amplitude einstellt. Da die Kanten des Hohlkörpers im Hinblick auf die charakteristische Beullast des Hohlkörpers Versteifungen darstellen, stellt sich beim Aufbringen der Druckspannung quer zur Beanspruchung ein Hängematteneffekt ein, bei welchem sich die Seitenflächen des Hohlkörpers nach außen in plastischer Weise ausbeulen und somit die Ausbeulung bilden. Dabei sollte der Betrag der auf den Hohlkörper aufgebrachten Druckspannung größer als die Verzweigungslast der einzelnen Seitenflächen des Hohlkörpers und kleiner als die aufgrund der versteiften Kanten überkritischen Tragfähigkeit des Hohlkörpers sein. Diese Ausbeulung ist ein Teil der Ansprechtriggerung der fertig gestellten Energieverzehrvorrichtung. Indem die Amplitude der Ausbeulung durch Aufbringen einer vorab berechneten oder andersartig festgelegten Druckspannung in definierter Weise ausgebildet wird, ist das für das Ansprechen der fertig gestellten Energieverzehrvorrichtung charakteristische Kraftniveau vorab einstellbar.

Alternativ oder zusätzlich zu der zuvor genannten Ausführungsform, bei welcher zum Ausbilden des sich in Umlaufrichtung zumindest teilweise und den Umfang des Hohlkörpers erstreckenden Falt- bzw. Beulbereiches auf den Hohlkörper eine Druckspannung aufgebracht wird, ist in einer bevorzugten Realisierung des erfindungsgemäßen Verfahrens vorgesehen, dass vor dem Verfahrenschritt des Ausbildens eines sich in Umlaufrichtung zumindest teilweise und den Umfang des Hohlkörpers erstreckenden Falt- bzw. Beulbereiches zumindest ein Zugelement, insbesondere ein Zugband, mit der Wandung des Hohlkörpers an zwei gegenüberliegenden Befestigungsstellen im Inneren des Hohlkörpers derart befestigt wird, dass sich das Zugelement quer zur Längsrichtung des Hohlkörpers erstreckt. Dieses Zugelement dient dabei als Ansprechsicherung, welche derart mit dem Hohlkörper zusammenwirkt, dass sich nach Auslösung dieser Ansprechsicherung zumindest eine sich in Umlaufrichtung zumindest teilweise um den Umfang des Verbindungskörpers erstreckende erste Beule bzw. Falte bildet, wobei diese zumindest eine erste Beule bzw. Falte als Triggerung zur Vorgabe der Faltenbildung des als Hohlkörper ausgebildeten Energieverzehrelements beim Ansprechen der Energieverzehrvorrichtung dient.

Bei der zuletzt genannten bevorzugten Weiterentwicklung des erfindungsgemäßen Verfahrens ist zusätzlich vorgesehen, dass zur Ausbildung des sich in Umlaufrichtung zumindest teilweise um den Umfang des Hohlkörpers erstreckenden Falt- bzw. Beulbereichs ein Manipulator in das Innere des Verbindungskörpers derart vorgeschoben wird, so dass das Zugelement vorzugsweise mittig eingedrückt wird und die zwei gegenüberliegenden Befestigungsstellen relativ aufeinander zu bewegt werden.

Hierbei handelt es sich um eine besonders leicht zu realisierende aber dennoch effektive Lösung zum Herstellen einer Energieverzehrvorrichtung mit integrierter Ansprechsicherung. Durch das Vorschieben des Manipulators in das Innere des Verbindungskörpers derart, dass vorzugsweise der mittige Bereich des Zugelements eingedrückt und somit die zwei gegenüberliegenden Befestigungsstellen relativ aufeinander zu bewegt werden, bildet sich bei den jeweiligen Befestigungsstellen eine sich in Umlaufrichtung zumindest teilweise um den Umfang des Hohlkörpers erstreckende Einbeulung mit einer zur Mitte des Hohlkörpers zeigenden Beulrichtung aus. Es ist ersichtlich, dass bei dieser bevorzugten Ausführungsform die Amplitude der derart eingebrachten ersten Einbeulung und somit die Ansprechkraft für die Energieverzehrvorrichtung eingestellt werden können, indem das Ausmaß des mit dem Manipulator bewirkten Eindrückens des zwischen den gegenüberliegenden Befestigungsstellen liegenden Bereiches des Zugelements eingestellt wird. Selbstverständlich kommen für die Ansprechsicherung aber auch andere Ausführungen in Frage.

Hinsichtlich der Befestigung des zumindest einen Zugelements am Hohlkörper der Energieverzehrvorrichtung ist vorzugsweise vorgesehen, dass das zumindest eine im Inneren des Hohlkörpers vorgesehene Zugelement an zwei gegenüberliegenden Befestigungsstellen mit der Innenwandung des Verbindungskörpers kraft-, form- und/oder stoffschlüssig verbunden ist. Andererseits ist es aber auch denkbar, dass das zumindest eine im Inneren des Hohlkörpers vorgesehene Zugelement an zwei gegenüberliegenden Befestigungsstellen mit der Außenwandung des Hohlkörpers verbunden ist und von den jeweiligen Befestigungsstellen durch entsprechende in der Wandung des Hohlkörpers vorgesehene Öffnungen läuft. Bei dieser Art der Befestigung handelt es sich um eine besonders leicht zu realisierende Lösung.

In Hinblick auf den in das Innere des Hohlkörpers verschiebbaren Manipulators, der zum Eindrücken des zumindest einen im Inneren des Hohlkörpers vorgesehenen Zugelements dient, ist es bevorzugt, dass dieser an seinem Kopfbereich einen Dorn aufweist, wobei dieser Dorn zusammen mit dem Kopfbereich durch eine entsprechende Öffnung in der ersten oder zweiten Stirnplatte relativ zu der Energieverzehrvorrichtung in Längsrichtung dieser verschiebbar ist.

Schließlich ist es im Hinblick auf das erfindungsgemäße Verfahren ferner bevorzugt, wenn nach dem Ausbilden des Falt-/Beulbereiches in dem Hohlkörper das zumindest eine Zugelement wieder aus dem Inneren des Hohlkörpers entfernt wird, damit dieses das Ansprechverhalten der Energieverzehrvorrichtung bzw. den Ereignisablauf beim Energieverzehr nicht negativ beeinflussen kann.

Im Folgenden werden bevorzugte Ausführungsformen der erfindungsgemäßen Lösung anhand der beigefügten Zeichnungen beschrieben.

Es zeigen:

Fig. 1: eine teilgeschnittene perspektivische Ansicht einer bevorzugten Ausführungsform der erfindungsgemäßen Energieverzehrvorrichtung;

Fig. 2: eine perspektivische Ansicht der bevorzugten Ausführungsform der erfindungsgemäßen Energieverzehrvorrichtung;

Fig. 3a: eine Seitenansicht der bevorzugten Ausführungsform der erfindungsgemäßen Energieverzehrvorrichtung;

Fig. 3b:	eine Seitenschnittansicht der bevorzugten Ausführungsform der erfindungsgemäßen Energieverzehrvorrichtung;

Fig. 4a:	eine Draufsicht auf die bevorzugte Ausführungsform der erfindungsgemäßen Energieverzehrvorrichtung;

Fig. 4b:	eine Draufsicht auf die bevorzugte Ausführungsform der erfindungsgemäßen Energieverzehrvorrichtung in einer geschnittenen Darstellung;

Fig. 5:	eine Ansicht von Vorne auf die erste Stirnplatte der bevorzugten Ausführungsform der erfindungsgemäßen Energieverzehrvorrichtung;

Fig. 6:	eine Ansicht von Vorne auf die zweite Stirnplatte der bevorzugten Ausführungsform der erfindungsgemäßen Energieverzehrvorrichtung;

Fig. 7:	eine perspektivische Ansicht auf eine Energieverzehrvorrichtung vor dem Ausbilden des Falt- bzw. Beulbereiches in der Wandung des Hohlkörpers gemäß einer ersten bevorzugten Ausführungsform des erfindungsgemäßen Verfahrens zur Herstellung der Energieverzehrvorrichtung;

Fig. 8:	eine halbtransparente, perspektivische Ansicht auf eine Energieverzehrvorrichtung vor dem Ausbilden des Falt- bzw. Beulbereichs in der Wandung des Hohlkörpers gemäß einer zweiten bevorzugten Ausführungsform des erfindungsgemäßen Verfahrens zur Herstellung der Energieverzehrvorrichtung;

Fig. 9a:	eine längsgeschnittene Darstellung der in Fig. 8 gezeigten Energieverzehrvorrichtung;

Fig. 9b:	eine längsgeschnittene Darstellung der in Fig. 9a gezeigten Energieverzehrvorrichtung nach dem Aufbringen einer Druckspannung auf den Hohlkörper zum Ausbilden einer Ausbeulung in der Wandung des Hohlkörpers;

Fig. 9c:	eine längsgeschnittene Darstellung der in Fig. 9a gezeigten Energieverzehrvorrichtung mit einem vorgeschobenen Manipulator zum Ausbilden des Faltbzw. Beulbereiches in der Wandung des Hohlkörpers;

Fig. 9d:	eine längsgeschnittene Darstellung der in Fig. 9a gezeigten Energieverzehrvorrichtung nach dem Ausbilden des Falt-/Beulbereiches in der Wandung des Hohlkörpers;

Fig. 10:	eine perspektivische Ansicht der in Fig. 9c gezeigten Energieverzehrvorrichtung vor dem Entfernen der Zugelemente aus dem Inneren des Hohlkörpers.

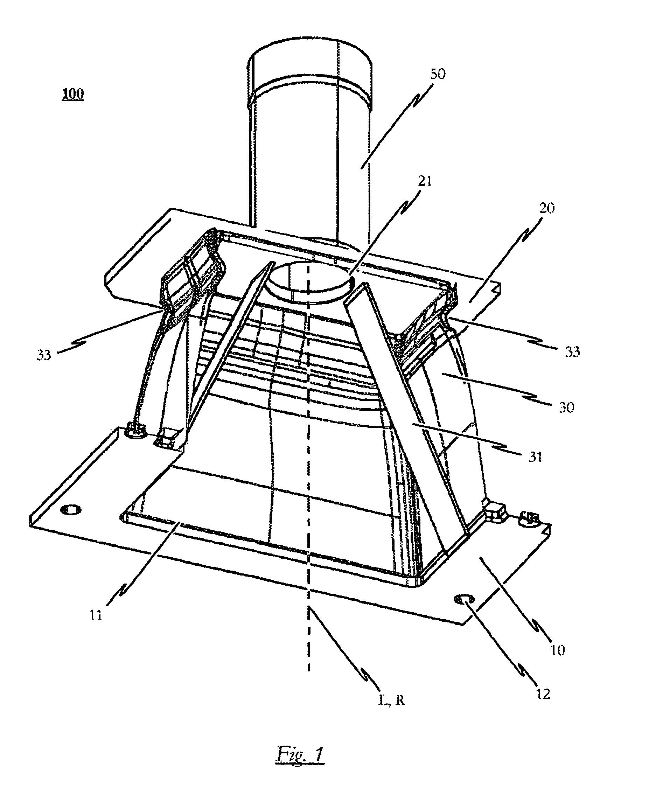

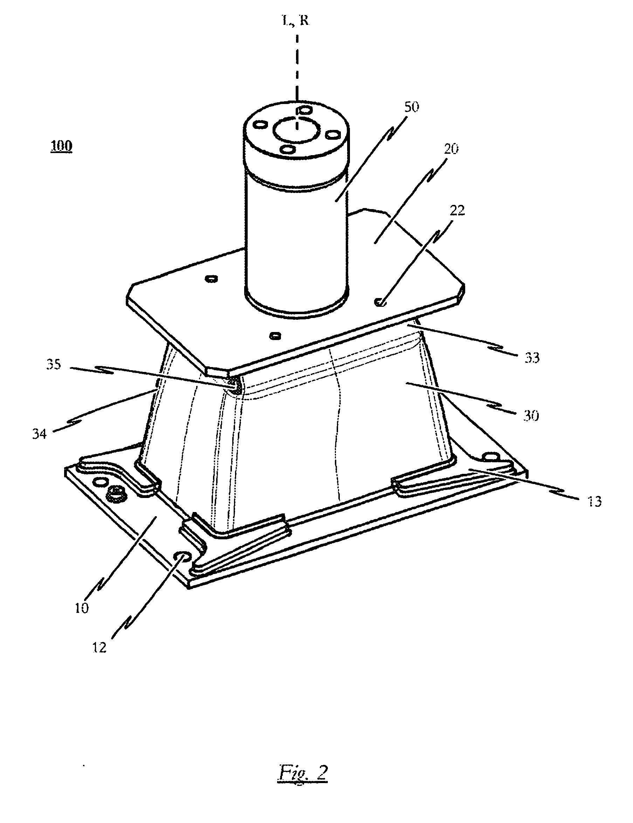

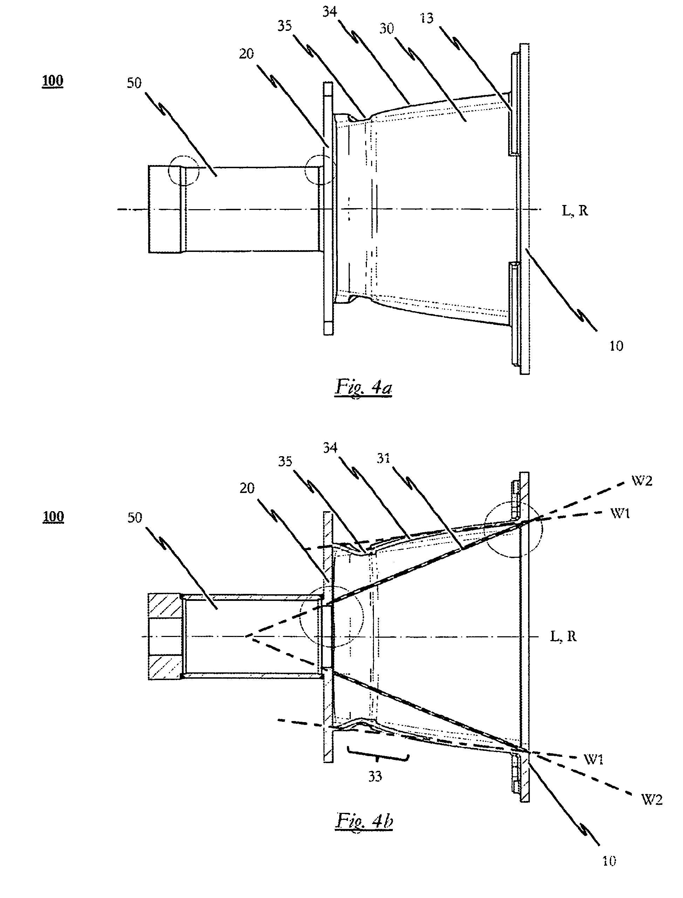

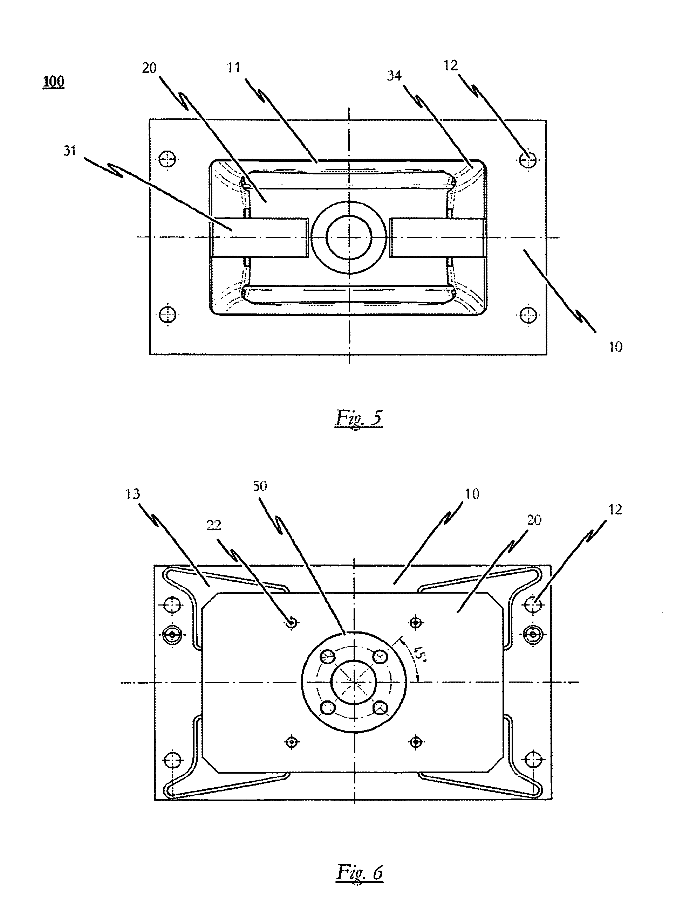

In den Figuren 1 bis 6 ist in unterschiedlichen Ansichten eine bevorzugte Ausführungsform der erfindungsgemäßen Energieverzehrvorrichtung 100 dargestellt. Diese Energieverzehrvorrichtung 100 eignet sich insbesondere als Stoßsicherung, vorzugsweise in Kombination mit einer (nicht explizit dargestellten) Zug-/Stoßeinrichtung zum Schutz eines Fahrzeuguntergestells eines mehrgliedrigen Schienenfahrzeuges.

Wie dargestellt, weist die Energieverzehrvorrichtung 100 eine erste und eine zweite Stirnplatte 10, 20 auf, welche jeweils die Funktion eines Kraftübertragungselements übernehmen. Die beiden Stirnplatte 10, 20 sind bei der bevorzugten Ausführungsform der erfindungsgemäßen Energieverzehrvorrichtung 100 jeweils als rechteckige Flansche ausgebildet. Selbstverständlich ist aber die Erfindung nicht auf eine derartige Ausgestaltung und Formgebung der Stirnplatten 10, 20 beschränkt.

Die erste Stirnplatte 10 ist ausgelegt, die Energieverzehrvorrichtung 100 an einem (nicht dargestellten) Hauptrahmen eines Wagenkastens zu befestigen; hierzu sind an der ersten Stirnplatte 10 entsprechende Befestigungsmittel 12 in Gestalt von Durchgangslöchern vorgesehen.

Andererseits ist die zweite Stirnplatte 20 der dargestellten Ausführungsform dahingehend ausgelegt, dass über die als Flansch ausgebildete zweite Stirnplatte 20 an der Energieverzehrvorrichtung 100 zumindest ein (nicht gezeigtes) vorgeschaltetes Element, wie etwa ein weiteres Energieverzehrelement, befestigt werden kann. Hierfür sind wiederum an der zweiten Stirnplatte 20 geeignete Befestigungsmittel 22 vorgesehen.

Wie bereits angedeutet, kommen als Befestigungsmittel 12, 22 insbesondere Durchgangsbohrungen in Frage, welche sich jeweils durch die erste bzw. zweite Stirnplatte 10, 20 erstrecken, und welche ausgelegt sind, eine Schraube, einen Stift oder dergleichen aufzunehmen, der letztendlich zum Befestigen der Energieverzehrvorrichtung 100 am Hauptrahmen des Wagenkastens bzw. zum Befestigen eines vorgeschalteten Elements an der Energieverzehrvorrichtung 100 dient.

Anstelle der Durchgangsbohrungen kommen als Befestigungsmittel 12, 22 aber auch andere Lösungen in Frage. Wenn beispielsweise konstruktionsbedingt zumindest eine der beiden Stirnplatten 10, 20 nur mit einem relativ kleinen Randbereich versehen werden kann, in welchem kein hinreichender Platz für geeignete Durchgangsbohrungen gegeben ist, oder wenn kein hinreichender Platz für Schrauben etc. vorliegt, die in den Durchgangsbohrungen aufzunehmen sind, bietet es sich an, an der Rückseite der entsprechenden Stirnplatte 10, 20, d.h. an der Seite der Stirnplatte 10, 20, die den Energieverzehrelement 30 abgewandt ist, einen Rohrstutzen oder dergleichen anzuschweißen oder andersartig zu befestigen, wobei letztendlich dieser Rohrstutzen zum Befestigen der Energieverzehrvorrichtung 100 am Hauptrahmen des Wagenkastens bzw. zum Befestigen eines vorgeschalteten Elements an der Energieverzehrvorrichtung 100 dient. Denkbar hierbei wäre es beispielsweise, dass im oder am freien Ende des Rohrstutzens ein geeignetes Verbindungselement angeordnet ist, welches zum Ausbilden einer kraft-, stoff- und /oder formschlüssigen Verbindung mit dem Hauptrahmen des Wagenkastens bzw. mit einem vorgeschalteten Element verwendet wird.

Die Energieverzehrvorrichtung 100 weist zusätzlich zu der ersten und zweiten Stirnplatte, 10, 20 des weiteren ein Energieverzehrelement 30 in Gestalt eines sich in Längsrichtung L der Energieverzehrvorrichtung 100 erstreckenden Hohlkörpers auf. Der Hohlkörper des Energieverzehrelements 30 dient bei der dargestellten Energieverzehrvorrichtung 100 als Verformungskörper, der nach Ansprechen der Energieverzehrvorrichtung 100 durch plastische Verformung zumindest einen Teil der über die Energieverzehrvorrichtung 100 übertragenen Energie in Wärmeenergie und Verformungsarbeit umwandelt und somit absorbiert.

Die beiden Stirnplatten 10, 20 und das Energieverzehrelement 30 sind spielfrei miteinander derart verbunden, dass Zug- und Stoßkräfte in Längsrichtung L der Energieverzehrvorrichtung 100 übertragbar sind, wobei der bei der Übertragung der Kräfte stattfindende Kraftfluss zumindest teilweise über die Wandung des in Gestalt eines Hohlkörpers ausgebildeten Energieverzehrelements 30 läuft. Denkbar hierbei wäre es, die beiden Stirnplatten 10, 20 an den jeweiligen Stirnseiten des als Hohlkörper ausgebildeten Energieverzehrelements 30 anzuschließen. Hierbei ist es von Vorteil, in den Stirnplatten 10, 20 jeweils eine umlaufende Nut auszubilden, in welcher die jeweilige Stirnseite des als Hohlkörper ausgebildeten Energieverzehrelements 30 aufgenommen wird. Alternativ oder zusätzlich hierzu können an den Stirnplatten 10, 20 auch geeignete Anschläge 13 ausgebildet sein, die zum Aufnehmen des als Hohlkörpers ausgebildeten Energieverzehrelements 30 dienen. In der dargestellten Ausführungsform sind derartige Anschläge 13 an der ersten Stirnplatte 10 ausgebildet.

Durch eine geeignete Wahl der Wandstärke des als Hohlkörper ausgebildeten Energieverzehrelements 30 sowie durch eine geeignete Wahl des für den Hohlkörper gewählten Materials kann sichergestellt werden, dass dem Energieverzehrelement 30 bis zu einem aufgrund eines Stoßes durch den Kraftfluss über das Energieverzehrelement 30 übertragenen festlegbaren Energiebetrag eine Kraftübertragungsfunktion zukommt, so dass die beiden Stirnplatten 10, 20 im wesentlichen starr zueinander sind.

Andererseits verliert das als Hohlkörper ausgebildete Energieverzehrelement 30 bei Überschreiten des bei einem Stoß durch den Kraftfluss über die Wandung des Hohlkörpers übertragenen, festlegbaren Energiebetrags seine Kraftübertragungsfunktion, so dass die beiden Stirnplatten, 10, 20 dann relativ zueinander in Längsrichtung L der Energieverzehrvorrichtung 100 verschoben werden. In diesem Fall wird zumindest ein Teil des übertragenen Energiebetrags von dem Energieverzehrelement 30 durch die plastische Deformation des Hohlkörpers in Verformungsarbeit und Wärme umgewandelt und somit abgebaut.

Die nach dem Ansprechen des als Hohlkörper ausgebildeten Energieverzehrelements 30 bewirkte plastische Verformung des Hohlkörpers findet in Gestalt eines axial verlaufenden Faltenkollapses statt, wobei sich in Längsrichtung L der Energieverzehrvorrichtung 100 progressiv fortschreitende parallele Faltungen ergeben.

Um zu erreichen, dass sich nach Ansprechen des Energieverzehrelements 30 die Falten in einer definierten, vorhersagbaren Weise bilden, und um somit im Hinblick auf den bewirkten Energieverzehr einen vorab festlegbaren Ereignisablauf (insbesondere mit einer vorab genau vorhersehbaren Ansprechkraft) zu ermöglichen, ist vorgesehen, dass das Energieverzehrelement 30 eine Ansprechtriggerung in Gestalt eines sich in Umlaufrichtung zumindest teilweise um den Umfang des Hohlkörpers erstreckenden Falt- oder Beulbereiches 33 aufweist. Dieser Falt- oder Beulbereich 33 dient beim Ansprechen des Energieverzehrelements 30 zur Vorgabe der Faltenbildung des als Hohlkörper ausgebildeten Energieverzehrelements 30.

Im einzelnen ist bei der bevorzugten Ausführungsform das Energieverzehrelement 30 in Geltalt eines gekanteten pyramidenstumpfartigen Körpers ausgebildet, der eine sich von der ersten Stirnplatte 10 in Richtung der zweiten Stirnplatte 20 verjüngende Formgebung aufweist. Dabei ist in der Wandung des Pyramidenstumpfes am querschnittskleineren Ende des Energieverzehrelements 30 die Ansprechtriggerung in Gestalt des Falt- bzw. Beulbereiches 33 vorgesehen. Ferner befinden sich in der Höhe des Falt- bzw. Beulbereiches 33 Blechausschnitte bzw. Aussparungen 35 an den Kanten 34 des Hohlkörpers 30. Diese Blechausschnitte 35 an den Kanten 34 des als Pyramidenstumpf ausgebildeten Energieverzehrelements 30 dienen dazu, dass die jeweilige Kante 34 des Hohlkörpers 30 kein natürliches Aussteifen des Energieverzehrelements 30 in Höhe des Falt- bzw. Beulbereiches 33 bildet, und dass sich dieser Falt- bzw. Beulbereich 33 durch das (nachfolgend beschriebene) Vordrücken eines Manipulators 40 definiert ausprägen lässt. Insbesondere kann damit erreicht werden, dass Spannungsspitzen beim Auslösen des in der Energieverzehrvorrichtung 100 vorgesehenen Energieverzehrelements 30 reduziert werden können.

Wie es insbesondere Fig. 1 zu entnehmen ist, sind im Inneren des als Hohlkörper ausgebildeten Energieverzehrelements 30 insgesamt zwei Zugkraft-Übertragungselemente 31 vorgesehen, welche jeweils die erste Stirnplatte 10 mit der zweiten Stirnplatte 20 verbinden. Diese Zugkraft-Übertragungselemente 31 dienen dazu, Zugkräfte in Längsrichtung L der Energieverzehrvorrichtung 100 zu übertragen. Wesentlich ist dabei, dass die Wirkungslinie W2 (vgl. Fig. 46) der über die beiden Zugkraft-Übertragungselemente 31 übertragenen Zugkräfte vollständig im Inneren des jeweiligen Zugkraft-Übertragungselements 31 verläuft.

Anhand Fig. 1 ist des weiteren zu erkennen, dass sich bei der dargestellten bevorzugten Ausführungsform die beiden Zugkraft-Übertragungselement 31 entlang von verschiedenen Verbindungsgeraden erstrecken, wobei die Resultierende R der beiden Verbindungsgeraden mit der Längsachse L der Energieverzehrvorrichtung 100 übereinstimmt. Im Einzelnen sind die beiden Verbindungsgeraden, entlang welcher sich die beiden Zugkraft-Übertragungselemente 31 erstrecken, schräg zur Längsachse L der Energieverzehrvorrichtung 100 angeordnet. Wie zuvor dargelegt, ist es mit dieser Maßnahme möglich, die Biegesteifigkeit der beiden Zugkraft-Übertragungselemente 31 vorab festzulegen, ohne dass die mit den beiden Zugkraft-Übertragungselementen erhöhte Zugfestigkeit der Energieverzehrvorrichtung 100 beeinflusst wird.

Obwohl in der dargestellten Ausführungsform der Energieverzehrvorrichtung 100 die beiden Zugkraft-Übertragungselemente in Gestalt von Zugbändern ausgeführt sind, kommen selbstverständlich auch andere Ausgestaltungen, wie etwa Stäbe, Stangen, Seile etc. in Frage.

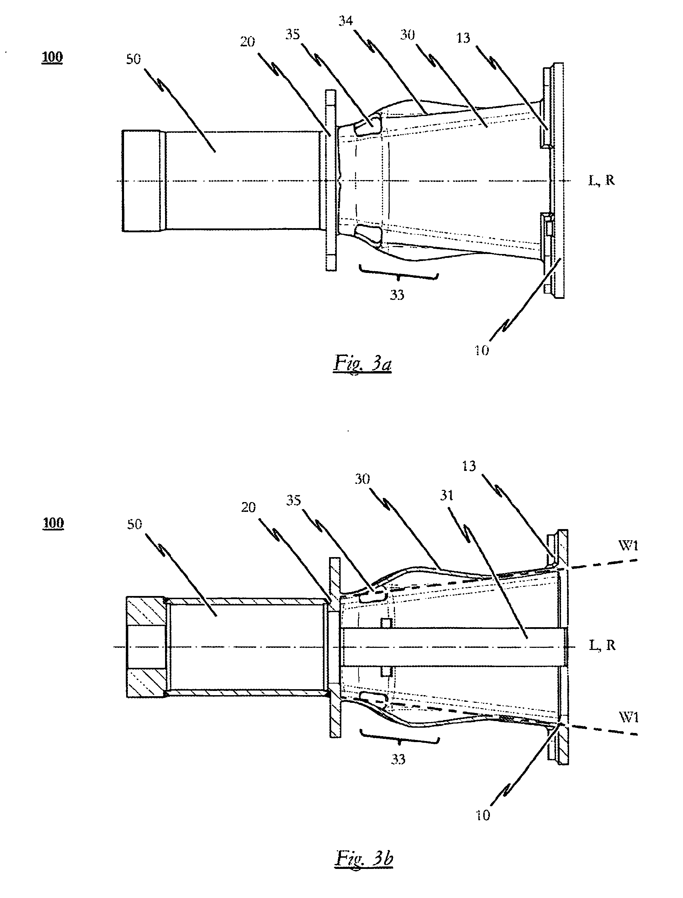

Wie es insbesondere Fig. 3b zu entnehmen ist, kommt bei der bevorzugten Ausführungsform der erfindungsgemäßen Energieverzehrvorrichtung 100 für das Energieverzehrelement 30 ein Hohlkörper zum Einsatz, der derart ausgelegt ist, dass die Wirkungslinie W1 der über das Energieverzehrelement 30 übertragenen Druckkräfte - mit Ausnahme in dem Falt- bzw. Beulbereich 33 - vollständig innerhalb der Wandung des als Hohlkörper ausgebildeten Energieverzehrelements 30 verläuft. Mit dieser Maßnahme wird sichergestellt, dass der Falt- bzw. Beulbereich 33, welcher in Umlaufrichtung zumindest teilweise um den Umfang des Hohlkörpers 30 ausgebildet ist, als einzige geometrische Imperfektion in dem Energieverzehrelement 30 vorgesehen ist, so dass eine genau einstellbare Ansprechtriggerung für die Faltenbildung des Energieverzehrelements 30 bei Überschreiten der für die Energieverzehreinrichtung 100 charakteristische Ansprechkraft möglich ist.

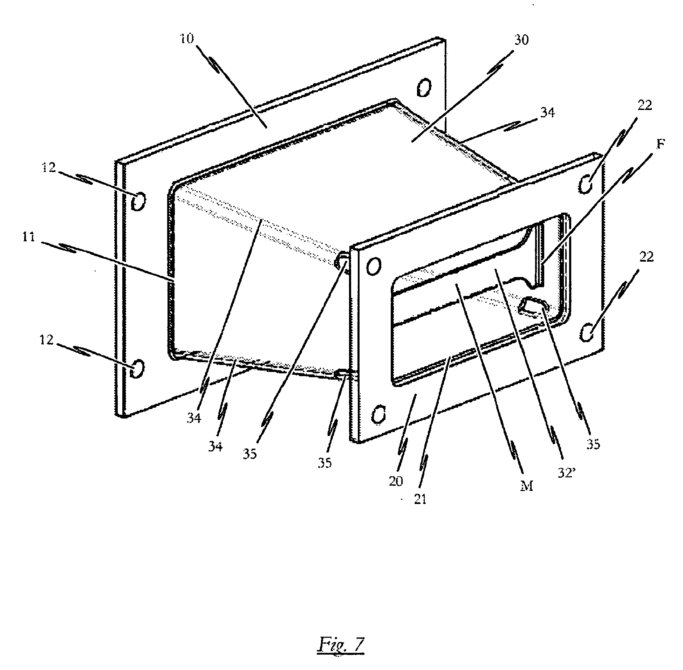

Nachfolgend werden unter Bezugnahme auf die Figuren 7 bis 10 verschiedene Möglichkeiten beschrieben, wie bei der Herstellung der Energieverzehrvorrichtung 100 der Falt- bzw. Beulbereich 33 in der Wandung des Hohlkörpers 30 ausgebildet werden kann.

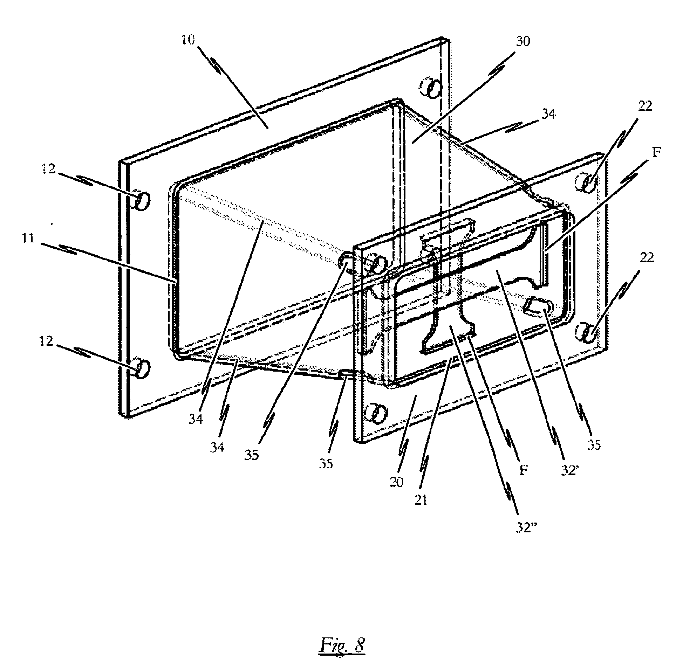

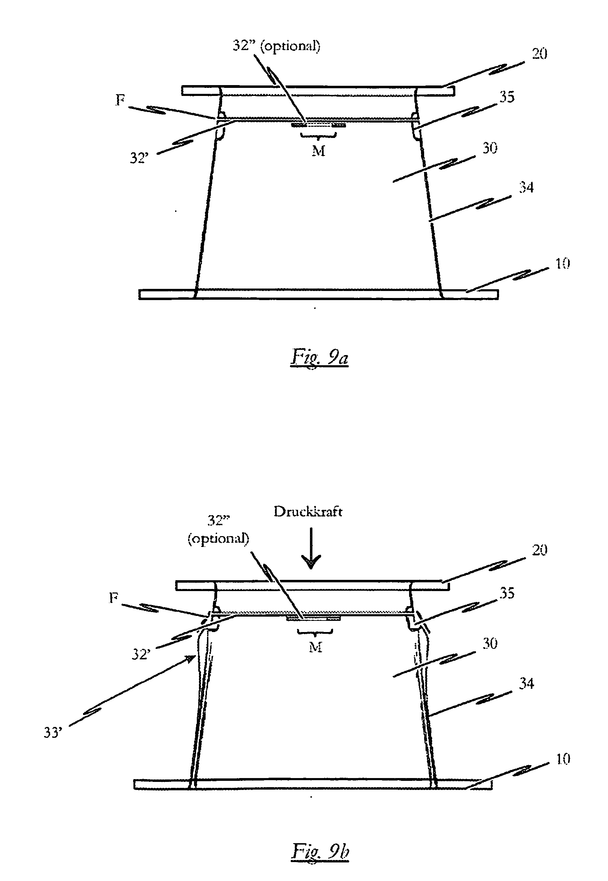

In den Figuren 7 und 8 ist jeweils ein Zustand der (noch nicht vollständig fertig gestellten) Energieverzehrvorrichtung gezeigt, in welchem noch kein Falt- bzw. Beulbereich in dem Hohlkörper 30 ausgebildet wurde und somit die Energieverzehrvorrichtung noch nicht mit einer Ansprechtriggerung versehen ist. Der Vorgang des Ausbildens des Falt- bzw. Beulbereiches 33 in dem Hohlkörper 30 wird anschließend unter Bezugnahme auf die Figuren 9a bis 9c beschreiben.

Bei der in Fig. 8 dargestellten Ausführungsform handelt es sich um eine (ebenfalls noch nicht vollständig fertig gestellte) Energieverzehrvorrichtung, die zwei in etwa orthogonal zueinander ausgerichtete Zugelemente 32', 32" aufweist, wobei jedes der beiden Zugelemente 32', 32" an zwei gegenüberliegenden Befestigungsstellen F mit der Wandung des Hohlkörpers 30 verbunden ist.

Andererseits zeigt Fig. 7 eine Ausführungsform der (noch nicht vollständig fertig gestellten) Energieverzehrvorrichtung, bei welcher lediglich ein Zugelement 32' zum Ausbilden des Falt- bzw. Beulbereiches vorgesehen ist. Dieses einzige Zugelement 32' liegt bei Fig. 7 in einer im wesentlichen horizontal verlaufenden Ebene, obwohl für dieses Zugelement 32' selbstverständlich auch andere Ausrichtungen in Frage kommen.

Möglichkeiten zum definierten Ausbilden der Ansprechtriggerung werden anschließend unter Bezugnahme auf die Figuren 9a bis 9d beschrieben. Die Funktionsweise der dabei zum Einsatz kommenden Zugelemente 32', 32" wird ebenfalls in diesem Zusammenhang erläutert.

Der Hohlkörper 30 weist, wie es beispielsweise in Fig. 9a in einer längsgeschnittenen Darstellung gezeigt ist, eine sich von der ersten Stirnplatte 10 in Richtung der zweiten Stirnplatte 20 verjüngende Formgebung in Gestalt eines gekanteten pyramidenstumpfartigen Körpers 30 auf. Dabei sind in dem Pyramidenstumpf am querschnittskleineren Ende des Hohlkörpers 30 die entsprechenden Zugelemente 32', 32" für das Ausbilden des Falt- bzw. Beulbereiches 33 angebracht. Ferner befinden sich in Höhe der Zugelemente 32', 32" die bereits erwähnten Blechausschnitte bzw. Aussparungen 35 an den Kanten 34 des Hohlkörpers 30. Es sei darauf hingewiesen, dass bei der in Fig. 9a bis Fig. 9c gezeigten (noch nicht vollständig fertig gestellten) Energieverzehrvortung noch keine Zugkraft-Übertragungselemente 31 eingesetzt wurden. Diese Zugkraft-Übertragungselemente 31 werden erst nach Ausbildung des Falt- bzw. Beulbereiches 33 entsprechend mit den jeweiligen Stirnplatten 10, 20 form-, stoff- und/oder kraftschlüssig verbunden.

Im Einzelnen ist in Fig. 9a in einer längsgeschnittenen Darstellung die in Fig. 8 perspektivisch dargestellte Energieverzehrvorrichtung gezeigt. Anhand dieser Darstellung ist insbesondere die Lage der Zugelemente 32', 32" an dem verjüngten Ende des konisch zulaufenden Hohlkörpers 30 zu erkennen. Demnach befinden sich die jeweiligen Befestigungsstellen F zum Befestigen der Zugelemente 32', 32" jeweils an Positionen auf der Innenwandung des Hohlkörpers 30, die sich in etwa in Höhe der Blechausschnitte 35 an den Kanten 34 des pyramidenstumpfartigen Hohlkörpers 30 befinden.

Alternativ hierzu wäre es aber auch denkbar, dass die im Inneren des Hohlkörpers 30 vorgesehenen Zugelemente 32', 32" an zwei gegenüberliegenden Befestigungsstellen F mit der Außenwandung des Verbindungskörpers 39 kraft-, stoff- und/oder formschlüssig verbunden sind, wobei dann die jeweiligen Zugelemente 32', 32" von den entsprechenden Befestigungsstellen F durch geeignete in der Wandung des Hohlkörpers 30 vorgesehene Öffnungen laufen.

An dieser Stelle sei darauf hingewiesen, dass die im Zusammenhang mit den Figuren 9a bis 9d dargelegten Ausführungen selbstverständlich auch für die in Fig. 7 gezeigte Ausführungsform gelten, bei welcher zum Ausbilden des Falt- bzw. Beulbereiches 33 lediglich ein Zugelement 32' verwendet wird. Von daher wurde in den Figuren 9a bis 9d bei den entsprechenden Komponenten, die bei der in Fig. 8 gezeigten Ausführungsform vorgesehen und bei der in Fig. 7 gezeigten Ausführungsform nicht vorgesehen sind, der entsprechende Zusatz "optional" verwendet.

In Fig. 9b ist die in Fig. 9a gezeigte Energieverzehrvorrichtung 100 in einem Zustand während des Aufbringens bzw. nach dem Aufbringen einer Druckspannung auf den Hohlkörper 30 gezeigt. In diesem Fall wird zum Ausbilden des sich in Umlaufrichtung zumindest teilweise und den Umfang des Hohlkörpers 30 erstreckenden Beulbereiches 33' auf den Hohlkörper 30 in seiner Längsrichtung eine Druckspannung aufgebracht. Der Betrag dieser auf den Hohlkörper 30 aufgebrachten Druckspannung wird dabei derart gewählt, dass sich in definierter Weise quer zur Beanspruchung in Umlaufrichtung zumindest teilweise um den Umfang des Hohlkörpers 30 eine Ausbeulung 33' einstellt. Da die Kanten 34 des Hohlkörpers 30 Versteifungen darstellen, stellt sich beim Aufbringen der Druckspannung quer zur Beanspruchung ein Hängematteneffekt ein, bei welchem sich die Seitentlächen des Hohlkörpers 30 in plastischer Weise nach außen beulen und somit die Ausbeulung 33' bilden. Diese derart ausgebildete Ausbeulung 33' ist ein Teil der Ansprechtriggerung der fertig gestellten Energieverzehrvorrichtung.

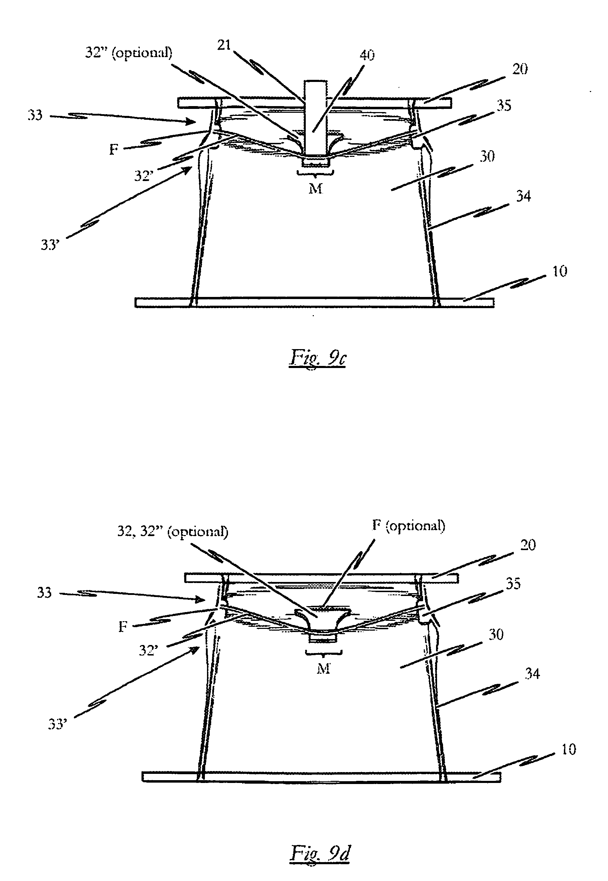

Im Anschluss an das Ausbilden der Ausbeulung 33' wird in der Wandung des Hohlkörper 30 ferner eine Einbeulung 33 ausgebildet, wie es nachfolgend unter Bezugnahme auf Fig. 9c erläutert wird. Wie in Fig. 9c gezeigt, wird durch Vorschieben eines Manipulators 40 die Einbeulung 33 in der Wandung des Hohlkörpers 30 ausgebildet. Im einzelnen ist dargelegt, dass der in das Innere des Hohlkörpers 30 vorzuschiebende Manipulator 40 einen Dorn aufweist, welcher durch eine entsprechende Öffnung 21 an der Stirnseite der zweiten Stirnplatte 20 relativ zu der Energieverzehrvorrichtung 100 in Längsrichtung L dieser verschoben wird, so dass dieser mit einem zwischen den gegenüberliegenden Befestigungsstellen F liegenden Bereich M in Kontakt kommt. Dabei wird der zwischen den gegenüberliegenden Befestigungsstellen F liegende Bereich M der jeweiligen Zugelemente 32', 32" mit Hilfe des Manipulators 40 eingedrückt, infolgedessen die Zugelemente 32', 32" die Seitenwände des Hohlkörpers 30 an den jeweiligen Befestigungsstellen F nach Innen ziehen. Dadurch entsteht an jeder Seite des Hohlkörpers 30, an welcher sich eine Befestigungsstelle F für das Zugelement 32', 32" befindet, eine Einbeulung 33.

Diese Einbeulung 33 ist - wie auch die zuvor beschriebenen Ausbeulung 33' - derart ausgeführt, dass bei einer Stoßkraftübertragung die Wirkungslinie W2 in dem Falt- bzw. Beulbereich 33, 33' nicht mehr innerhalb der Wandung des Hohlkörpers 30 verläuft. Durch diese Einbeulung ist die erste Falte an jeder Seite in ihrer Position im pyramidenstumpfartigen Körper 30 und in ihrer Faltrichtung vorgegeben.

Indem das durch das Vordrücken des Manipulators 40 bewirkte Eindrücken der jeweiligen Zugelemente 32', 32" bzw. des Zugelements 32' entsprechend geregelt wird, kann die Amplitude der Einbeulung 33 eingestellt werden. Die Einbeulung 33 bildet bei der in Fig. 9 gezeigten Ausführungsform zusammen mit der Ausbeulung 33' den als Ansprechtriggerung zum Einsatz kommenden Falt- bzw. Beulbereich. Da, wie bereits erwähnt, die Amplitude von sowohl der Einbeulung 33 als auch der Ausbeulung 33' vorab festlegbar ist, kann auch bei der Fertigung des Energieverzehrelements 30 die für die Energieverzehrvorrichtung 100 charakteristische Ansprechkraft genau eingestellt werden. Es ist ersichtlich, dass die Amplitude der Einbeulung 33 umso größer und die Ansprechkraft für das Energieverzehrelement 30 umso kleiner ist, je stärker die jeweiligen Zugelemente 32', 32" bzw. das Zugelement 32' mit dem Manipulator 40 eingedrückt werden.

Die sich nach dem Vorschieben des Manipulators 40 ausbildende Einbeulung 33 erstreckt sich in Umlaufrichtung zumindest teilweise um den Umfang des Hohlkörpers 30 und weist eine zur Mitte des Hohlkörpers 30 hinzeigende Beulrichtung auf, wodurch zusätzlich zur Ausbeulung 33' eine Triggerung zur Vorgabe der Faltenbildung des Hohlkörpers 30 beim Ansprechen der Energieverzehrvorrichtung 100 bereitgestellt wird.

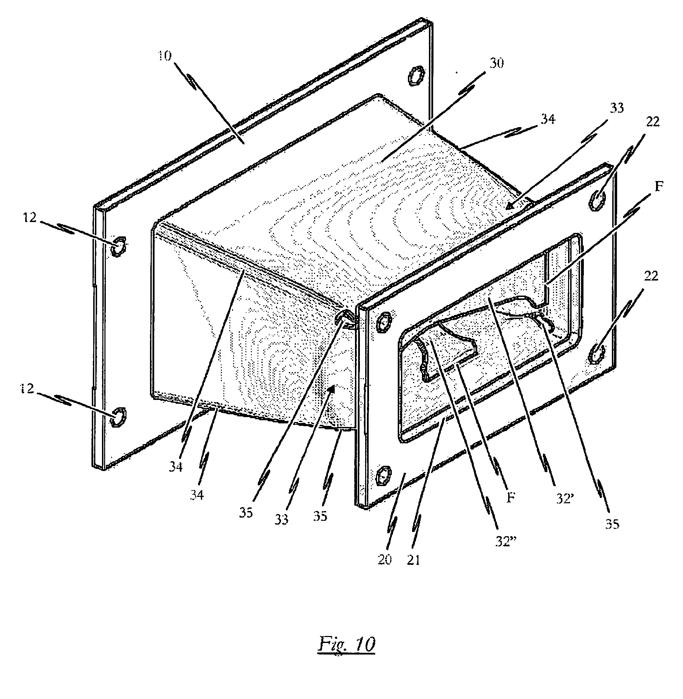

In den Figuren 9d und 10 ist die Energieverzehrvorrichtung gemäß Fig. 9a in einer längsgeschnittenen Darstellung bzw. in einer perspektivischen Darstellung jeweils für einen Fall gezeigt, nachdem einerseits durch das Ausüben der Druckspannung auf den Hohlkörper 30 und andererseits durch das Vorschieben des Manipulators 40 der Falt- bzw. Beulbereich 33, 33' im Hohlkörper 30 ausgebildet wurde (vgl. Fig. 9b und Fig. 9c), und nachdem sich somit die Triggerung zur Vorgabe der Faltenbildung des Hohlkörpers 30 beim Ansprechen der Energieverzehrvorrichtung 100 ausgebildet hat. Dabei ist zu erkennen, dass die bei der bevorzugten Ausführungsform an jeder Kante 34 des Hohlkörpers 30 vorgesehene Aussparung 35 im Bereich des Falt- bzw. Beulbereiches 33, 33' liegt. Diese Blechausschnitte 35 an den Kanten 34 des pyramidenartigen Hohlkörpers 30 dienen dazu, dass die jeweilige Kante 34 kein natürliches Aussteifen des Hohlkörpers 30 in Höhe des Falt- bzw. Beulbereiches 33, 33' bildet, und dass sich einerseits die Ausbeulung 33' durch das Ausüben der Druckspannung auf den Hohlkörper 30 und andererseits die Einbeulung 33 durch das Vordrücken des Manipulators 40 definiert ausprägen lassen. Insbesondere kann damit erreicht werden, dass Spannungsspitzen beim Auslösen des in der Energieverzehrvorrichtung 100 vorgesehenen Energieverzehrelements 30 reduziert werden.

Zur Herstellung der erfindungsgemäßen Energieverzehrvorrichtung 100 ist es - ausgehend von den in Fig. 9d oder Fig. 10 dargestellten Ausführungsform - nunmehr erforderlich, die Zugelemente 32', 32" aus dem Inneren des Hohlkörpers 30 zu entfernen und entsprechende Zugkraft-Übertragungselemente 31 sowohl an der ersten Stirnplatte 10 als auch an der zweiten Stirnplatte 20 entsprechend anzubringen. Dies kann - wie bereits zuvor ausgelegt - derart erfolgen, dass die Zugkraft-Übertragungselemente 31 im Inneren des Hohlkörpers 30 verlaufen, wobei zu beachten ist, dass bei einer Zugkraftübertragung die Wirkungslinie W2 der über die Zugkraft-Übertragungselemente 31 übertragenen Zugkraft vollständig im Inneren des Zugkraft-Übertragungselementes 31 verläuft.

Es sei darauf hingewiesen, dass die Ausführung der Erfindung nicht auf die in den Zeichnungen beschriebenen Ausführungsbeispiele beschränkt ist, sondern auch in einer Vielzahl von Varianten möglich ist. Insbesondere gelten die im Zusammenhang mit der in Fig. 8 dargestellten Ausführungsform in analoger Weise für die in Fig. 7 gezeigte Realisierung, bei welcher lediglich ein Zugelement 32' vorgesehen ist. Auch kommt für die Formgebung des Hohlkörpers 30 eine andere Form als die dargestellte pyramidenstumpfartige Formgebung in Frage. Des weiteren ist die Lage der Ansprechtriggerung an dem verjüngten Ende des konisch ausgebildeten Verbindungskörpers nicht auf das in den Figuren gezeigte Ausführungsbeispiel beschränkt.

Sämtlichen Ausführungsformen der Erfindung ist insbesondere gemeinsam, dass mit Hilfe des zumindest einen Zugelements 32', 32" zumindest eine sich in Umlaufrichtung zumindest teilweise um den Umfang des Hohlkörpers 3 erstreckende erste Einbeulung 33 bildet, wobei diese zumindest eine erste Einbeulung 33 beim Ansprechen der Energieverzehrvorrichtung 100 als Triggerung zur Vorgabe der Faltenbildung des als Hohlkörper ausgebildeten Energieverzehrelements 30 dient.

Für das Ausbilden des als Ansprechtriggerung zum Einsatz kommende Falt- bzw. Beulbereiches ist es nicht zwingend erforderlich, dass sowohl die Ausbeulung 33' durch das Ausüben einer Druckspannung auf den Hohlkörper 30 als auch die Einbeulung 33 durch das Vordrücken des Manipulators 40 gebildet werden. Selbstverständlich ist es auch denkbar, dass als Ansprechtriggerung entweder nur die durch das Vordrücken des Manipulators 40 gebildete Einbeulung 33 oder nur die durch das Ausüben einer Druckspannung auf den Hohlkörper 30 gebildeten Ausbeulung 33' verwendet wird.

Ferner ist ersichtlich, dass der Falt- bzw. Beulbereich 33 jeweils in einem Bereich an bzw. in der Nähe der gegenüberliegenden Befestigungsstellen F liegt, an denen das im Inneren des Hohlkörpers 30 vorgesehene Zugelement 32' bzw. die im Inneren des Hohlkörpers 30 vorgesehenen Zugelemente 32', 32" mit dem Hohlkörper 30 verbunden ist bzw. verbunden sind.

**Bezugszeichenliste**

| | |
|---|---|
| 10 | erste Stirnplatte / erster Flansch |
| 11 | Öffnung in der ersten Stirnplatte |
| 12 | Befestigungsmittel |
| 13 | Anschläge |
| 20 | zweite Stirnplatte / zweiter Flansch |
| 21 | Öffnung in der zweiten Stirnplatte |
| 22 | Befestigungsmittel |
| 30 | Energieverzehrelement / Hohlkörper / Verbindungskörper |
| 31 | Zugkraft-Übertragungselement |
| 32', 32" | Zugelement / Zugband |
| 33 | Einbeulung des Falt- bzw. Beulbereiches (Ansprechtriggerung) |
| 33' | Ausbeulung des Falt- bzw. Beulbereiches (Ansprechtriggerung) |
| 34 | Kante des Hohlkörpers |
| 35 | Aussparung |
| 40 | Manipulator |
| 50 | Vorgeschaltetes Element |
| 100 | Energieverzehrvorrichtung |
| F | Befestigungsstelle |
| L | Längsachse der Energieverzehrvorrichtung |
| M | Mittiger Bereich des Zugelements |
| R | Resultierende der Verbindungsgeraden |
| W1 | Wirkungslinie der über das Energieverzehrelement übertragenen Druckkräfte |
| W2 | Wirkungslinie der über das Zugkraft-Übertragungselement übertragenen Zug-/Druckkräfte |

**Patentansprüche**

1. Energieverzehrvorrichtung für mehrgliedrige Fahrzeuge, insbesondere Schienenfahrzeuge, mit einer ersten Stirnplatte (10), einer zweiten Stirnplatte (20) und einem sich in Längsrichtung der Energieverzehrvorrichtung (100) erstreckenden und zwischen der ersten und der zweiten Stirnplatte (10, 20) angeordneten Energieverzehrelement (30) in Gestalt eines Hohlkörpers, wobei zur Vorgabe der Faltenbildung des Energieverzehrelements (30) beim Ansprechen der Energieverzehrvorrichtung (100) das Energieverzehrelement (30) eine Ansprechtriggerung in Gestalt eines sich in Umlaufrichtung zumindest teilweise um den Umfang des Hohlkörpers erstreckenden Falt- oder Beulbereichs (33, 33') aufweist,
**dadurch gekennzeichnet, dass**
die Energieverzehrvorrichtung (100) zumindest ein Zugkraft-Übertragungselement (31) aufweist, welches als ein von dem in Gestalt eines Hohlkörpers ausgebildeten Energieverzehrelement (30) unabhängiges Element ausgebildet ist, und welches die erste Stirnplatte (10) mit der zweiten Stirnplatte (20) verbindet und über seine gesamte Länge vollständig auf einer die erste Stirnplatte (10) mit der zweiten Stirnplatte (20) verbindenden Verbindungsgeraden liegt, wobei das zumindest eine Zugkraft-Übertragungselement (31) ausgelegt ist, Zugkräfte in Längsrichtung (L) der Energieverzehrvorrichtung (100) zu übertragen, wobei die Wirkungslinie (W2) der über das zumindest eine Zugkraft-Übertragungselement (31) übertragenen Zugkraft vollständig im Inneren des Zugkraft-Übertragungselements (31) verläuft.

2. Energieverzehrvorrichtung nach Anspruch 1, wobei das zumindest eine Zugkraft-Übertragungselement (31) eine vorab festlegbare Biegesteifigkeit aufweist.

3. Energieverzehrvorrichtung nach Anspruch 1 oder 2, welche zumindest zwei Zugkraft-Übertragungselemente (31) aufweist, die sich entlang von verschiedenen Verbindungsgeraden erstrecken, wobei die Resultierende (R) der Verbindungsgeraden mit der Längsachse (L) der Energieverzehrvorrichtung (100) übereinstimmt.

4. Energieverzehrvorrichtung nach Anspruch 3, wobei sich die Verbindungsgerade bzw. die Verbindungsgeraden, entlang welcher sich das zumindest eine Zugkraft-Übertragungselement (31) erstreckt bzw. entlang welcher sich die zumindest zwei Zugkraft-Übertragungselemente (31) erstrecken, schräg zur Längsachse (L) der Energieverzehrvorrichtung (100) verläuft bzw. verlaufen.

5. Energieverzehrvorrichtung nach einem der vorhergehenden Ansprüche, wobei das Energieverzehrelement (30) ausgelegt ist, bis zu einer vorab festlegbaren und für das Energieverzehrelement (30) charakteristischen Ansprechkraft Druckkräfte in Längsrichtung (L) der Energieverzehrvorrichtung (100) zu übertragen, wobei die Wirkungslinie (W1) der über das Energieverzehrelement (30) übertragenen Druckkräfte - mit Ausnahme des Falt- bzw. Beulbereiches (33, 33') - vollständig innerhalb der Wandung des als Hohlkörper ausgebildeten Energieverzehrelements (30) verläuft.

6. Energieverzehrvorrichtung nach einem der vorhergehenden Ansprüche, wobei das als Hohlkörper ausgebildete Energieverzehrelement (30) eine sich verjüngende Formgebung, vorzugsweise eine sich von der ersten Stirnplatte (10) in Richtung zur zweiten Stirnplatte (20) verjüngende Formgebung aufweist. -

7. Energieverzehrvorrichtung nach einem der vorhergehenden Ansprüche, wobei das als Hohlkörper ausgebildete Energieverzehrelement (30) eine gekantete, insbesondere pyramidenstumpfartige Formgebung aufweist.

8. Energieverzehrvorrichtung nach Anspruch 7, wobei zumindest eine und vorzugsweise jede Kante (34) des als Hohlkörper ausgebildeten Energieverzehrelements (30) eine Aussparung (35) aufweist, welche zumindest teilweise in dem Falt- bzw. Beulbereich (33) liegt.

9. Energieverzehrvorrichtung nach einem der vorhergehenden Ansprüche, wobei die erste Stirnplatte (10) als erster Flansch ausgeführt ist, über welchen die Energieverzehrvorrichtung (100), vorzugsweise lösbar, am Hauptrahmen eines Wagenkastens eines mehrgliedrigen Fahrzeuges, insbesondere Schienenfahrzeuges, befestigbar ist, und wobei die zweite Stirnplatte (20) als zweiter Flansch ausgeführt ist, über welchen zumindest ein der Energieverzehrrichtung (100) vorgeschaltetes Bauteil (50), wie etwa ein Kraftübertragungselement, ein Pufferelement oder ein zusätzliches Stoßsicherungselement, vorzugsweise lösbar mit der Energieverzehrvorrichtung verbindbar ist.

10. Verfahren zur Herstellung einer in einem der vorhergehenden Ansprüche genannten Energieverzehrvorrichtungen (100), wobei das Verfahren die folgenden Verfahrensschritte aufweist:

   a) Bereitstellen eines Hohlkörpers (30) mit einer gekanteten, insbesondere pyramidenstumpfartigen Formgebung;
   b) Befestigen einer ersten Stirnplatte (10) an einer ersten Stirnseite des Hohlkörpers (30) und einer zweiten Stirnplatte (20) an einer gegenüberliegenden zweiten Stirnseite des Hohlkörpers (30);

c) Ausbilden eines sich in Umlaufrichtung zumindest teilweise um den Umfang des Hohlkörpers (30) erstreckenden Falt- bzw. Beulbereiches (33, 33'); und

d) Befestigen von zumindest einem Zugkraft-Übertragungselement (31) sowohl an der ersten Stirnplatte (10) als auch an der zweiten Stirnplatte (20) derart, dass das zumindest eine Zugkraft-Übertragungselement (31) über die gesamte Länge des Zugkraft-Übertragungselements (31) vollständig auf einer die erste Stirnplatte (10) mit der zweiten Stirnplatte (20) verbindenden Verbindungsgeraden (W2) liegt.

11. Verfahren nach Anspruch 10, wobei der Verfahrensschritt c) ferner den folgenden Verfahrensschritt aufweist:

- Aufbringen einer Druckspannung auf den Hohlkörper (30), derart dass sich quer zur Beanspruchung in definierter Weise in Umlaufrichtung zumindest teilweise um den Umfang des Hohlkörpers (30) eine Ausbeulung (33') einstellt.

12. Verfahren nach Anspruch 11, wobei der Betrag der auf den Hohlkörper (30) aufgebrachten Druckspannung derart gewählt wird, dass sich die Ausbeulung (33') mit einer festlegbaren Amplitude einstellt.

13. Verfahren nach einem der Ansprüche 10 bis 12, welches ferner vor dem Verfahrensschritt c) den folgenden Verfahrensschritt aufweist:

- Befestigen von zumindest einem Zugelement (32', 32''), insbesondere Zugband, mit der Wandung des Hohlkörpers (30) an zwei gegenüberliegenden Befestigungsstellen (F) im Inneren oder außerhalb des Hohlkörpers (30) derart, dass sich das zumindest eine Zugelement (32', 32'') quer zur Längsrichtung (L) des Hohlkörpers (30) erstreckt,

wobei der Verfahrensschritt c) ferner den folgenden Verfahrensschritt aufweist:
- Vorschieben eines Manipulators (40) in das Innere des Verbindungskörpers (30) derart, dass das zumindest eine Zugelement (32', 32'') vorzugsweise mittig eingerückt wird und die zwei gegenüberliegenden Befestigungsstellen (F) des Zugelements (32', 32'') relativ aufeinander zu bewegt werden.

14. Verfahren nach Anspruch 13, wobei die zwei gegenüberliegenden Befestigungsstellen (F) im Inneren des Hohlkörpers (30) liegen, und wobei das zumindest eine im Inneren des Hohlkörpers (30) vorgesehene Zugelement (32', 32'') an den Befestigungsstellen (F) mit der Innenwandung des Verbindungskörpers (30) verbunden wird.

15. Verfahren nach Anspruch 13, wobei die zwei gegenüberliegenden Befestigungsstellen (F) außerhalb des Hohlkörpers (30) liegen, und wobei das zumindest eine im Inneren des Hohlkörpers (30) vorgesehene Zugelement (32', 32'') an den beiden Befestigungsstellen (F) mit der Außenwandung des Verbindungskörpers (30) derart verbunden wird, dass das zumindest eine Zugelement (32', 32'') von den jeweiligen Befestigungsstellen (F) durch entsprechende in der Wandung des Hohlkörpers (30) vorgesehene Öffnungen läuft.

16. Verfahren nach einem der Ansprüche 13 bis 15, wobei der in das Innere des Hohlkörpers (30) vorzuschiebende Manipulator (40) einen Dorn aufweist, welcher beim Vorschieben des Manipulators (40) durch eine entsprechende Öffnung (11, 21) in der ersten oder zweiten Stirnplatte (10, 20) relativ zu dem Hohlkörper (30) in Längsrichtung (L) des Hohlkörper (30) läuft und an einen zwischen den gegenüberliegenden Befestigungsstellen (F) liegenden Bereich (M) des zumindest einen Zugelements (32', 32'') anstößt.

17. Verfahren nach einem der Ansprüche 13 bis 16, welches nach dem Verfahrensschritt c) ferner den Verfahrensschritt des Entfernens des zumindest einen Zugelements (32', 32'') aus dem Inneren des Hohlkörpers (30) aufweist.

18. Verfahren nach einem der Ansprüche 10 bis 17, wobei die Amplitude des im Verfahrensschritt c) ausgebildeten Falt- bzw. Beulbereiches (33, 33') und somit die für das Energieverzehrelement (30) charakteristische Ansprechkraft einstellbar ist.

**Claims**

1. An energy absorption device for multi-member vehicles, railway vehicles in particular, comprising a first end plate (10), a second end plate (20) and an energy-absorbing element (30) in the form of a hollow body extending in the longitudinal direction of the energy absorption device (100) and arranged between the first and second end plate (10, 20), wherein the energy-absorbing element (30) comprises a response trigger in the form of a fold/bulge area (33, 33') extending in the circumferential direction at least partly around the periphery of the hollow body to predetermine the formation of folds in the energy-absorbing element (30) upon activation of the energy absorption device (100), **characterized in that** the energy absorption device (100) comprises at least one tractive force-transferring element (31), which is configured as an independent element from the energy-absorbing element (30) in the form of a hollow body, and which connects the first end plate (10) to the second end plate (20) and its entire length is wholly situated on a connecting line connecting the first end plate (10) to the second end plate (20), wherein the at least one tractive force-transferring element (31) is designed to transfer tractive forces in the longitudinal direction (L) of the energy absorption device (100), wherein the line of action (W2) for the tractive force conveyed via the at least one tractive force-transferring element (31) runs entirely within the interior of said tractive force-transferring element (31).

2. The energy absorption device according to claim 1, wherein the at least one tractive force-transferring element (31) has a predefinable flexural rigidity.

3. The energy absorption device according to claim 1 or 2 comprising at least two tractive force-transferring elements (31) extending along different connecting lines, wherein the resultant (R) of the connecting lines coincides with the longitudinal axis (L) of the energy absorption device (100).

4. The energy absorption device according to claim 3, wherein the connecting line or connecting lines along which the at least one tractive force-transferring element (31) extends, or along which the at least two tractive force-transferring elements (31) extend respectively, run(s) transverse to the longitudinal axis (L) of the energy absorption device (100).

5. The energy absorption device according to any one of the preceding claims, wherein the energy-absorbing element (30) is designed to transfer compressive forces up to a predefinable amount and characteristic for the response force of said energy-absorbing element (30) in the longitudinal direction (L) of the energy absorption device (100), wherein the line of action (W1) for the compressive forces conveyed via said energy-absorbing element (30) runs entirely - with the exception of the fold/bulge area (33, 33') - within the walls of the energy-absorbing element (30) configured as a hollow body.

6. The energy absorption device according to any one of the preceding claims, wherein the energy-absorbing element (30) configured as a hollow body exhibits a tapering profile, preferably a profile tapering from the first end plate (10) to the second end plate (20).

7. The energy absorption device according to any one of the preceding claims, wherein the energy-absorbing element (30) configured as a hollow body exhibits a canted, in particular truncated pyramidal profile.

8. The energy absorption device according to claim 7, wherein at least one and preferably each edge (34) of the energy-absorbing element (30) configured as a hollow body exhibits a recess (35) which is at least partly situated in the fold/bulge area (33).

9. The energy absorption device according to any one of the preceding claims, wherein the first end plate (10) is configured as a first flange via which the energy absorption device (100) can be preferably detachably attached to the main frame of a vehicle body of a multi-member vehicle, in particular a rail vehicle, and wherein the second end plate (20) is configured as a second flange via which at least one component (50) upstream of the energy absorption device (100) such as, for example, a force-transferring element, a buffer element or an additional shock absorbing element, can be preferably detachably connected to said energy absorption device.

10. A method for manufacturing an energy absorption device (100) as specified in any one of the preceding claims, wherein the method comprises the following procedural steps:

a) providing a hollow body (30) with a canted, in particular truncated pyramidal profile;
b) affixing a first end plate (10) to a first end face of the hollow body (30) and a second end plate (20) to an oppositely-arranged second end face of the hollow body (30);
c) forming a fold/bulge area (33, 33') to circumferentially extend at least partly around the periphery of the hollow body (30); and
d) affixing at least one tractive force-transferring element (31) both to the first end plate (10) as well as to the second end plate (20) such that the entire length of the at least one tractive force-transferring element (31) is wholly situated on a connecting line (W2) connecting the first end plate (10) and the second end plate (20).

11. The method according to claim 10, wherein the procedural step c) further comprises the following procedural step:

- applying a compressive stress to the hollow body (30) such that a defined bulge (33') ensues circumferentially transverse to the load at least partly around the periphery of the hollow body (30).

**12.** The method according to claim 11, wherein the amount of the compressive stress applied to the hollow body (30) is selected such that the bulge (33') can be set at a definable amplitude.

**13.** The method according to any one of claims 10 to 12 further comprising the following procedural step prior to procedural step c):

- affixing at least one traction element (32', 32"), a tie rod in particular, to the wall of the hollow body (30) at two oppositely-arranged fixing points (F) within the interior of or external to said hollow body (30) such that the at least one traction element (32', 32") extends transverse to the longitudinal direction (L) of said hollow body (30),

whereby the procedural step c) further comprises the following procedural step:

advancing a manipulator (40) into the interior of the connecting body (30) such that the at least one traction element (32', 32") is preferably compressed concentrically and the two oppositely-arranged fixing points (F) of the traction element (32', 32") are moved relative to one another.

**14.** The method according to claim 13, wherein the two oppositely-arranged fixing points (F) are situated within the interior of the hollow body (30), and wherein the at least one traction element (32', 32") provided within the interior of said hollow body (30) is connected to the inner wall of the connecting body (30) at fixing points (F).

**15.** The method according to claim 13, wherein the two oppositely-arranged fixing points (F) are situated external of the hollow body (30), and wherein the at least one traction element (32', 32") provided within the interior of said hollow body (30) is connected to the outer wall of the connecting body (30) at the two fixing points (F) such that the at least one traction element (32', 32") extends from the respective fixing points (F) through the appropriate openings provided in the wall of the hollow body (30).

**16.** The method according to any one of claims 13 to 15, wherein the manipulator (40) to be advanced within the hollow body (30) comprises a pin which extends through a corresponding opening (11, 21) in the first or second end plate (10, 20) in the longitudinal direction (L) of the hollow body (30) relative to said hollow body (30) upon the advancing of the manipulator (40) and strikes an area (M) situated between the oppositely-arranged fixing points (F) of the at least one traction element (32', 32").

**17.** The method according to any one of claims 13 to 16 which subsequent procedural step c), further comprises the procedural step of removing the at least one traction element (32', 32") from the interior of the hollow body (30).

**18.** The method according to any one of claims 10 to 17, wherein the amplitude of the fold/bulge area (33, 33') formed in procedural step c), and thus the characteristic response force for the energy-absorbing element (30), is adjustable.

**Revendications**

**1.** Dispositif d'absorption d'énergie pour véhicule à plusieurs éléments, en particulier pour véhicule ferroviaire, comprenant une première plaque frontale (10), une seconde plaque frontale (20) et un élément d'absorption d'énergie (30), sous la configuration d'un corps creux, qui s'étend en direction longitudinale du dispositif d'absorption d'énergie (100) et qui est agencé entre la première plaque frontale et la seconde plaque frontale (10, 20), dans lequel pour imposer la formation de plis dans l'élément d'absorption d'énergie (30) lors d'une réaction du dispositif d'absorption d'énergie (100), l'élément d'absorption d'énergie (30) comprend un déclenchement de réaction sous la configuration d'une zone de pliage ou de bombement (33, 33') qui s'étend en direction périphérique au moins partiellement autour de la périphérie du corps creux,
**caractérisé en ce que**
le dispositif d'absorption d'énergie (100) comprend au moins un élément de transmission de force de traction (31), lequel est réalisé sous la forme d'un élément indépendant de l'élément d'absorption d'énergie (30) réalisé sous la configuration d'un corps creux, et relie la première plaque frontale (10) à la seconde plaque frontale (20) et est situé sur la totalité de sa longueur entièrement sur une droite de liaison qui relie la première plaque frontale (10) à la seconde plaque frontale (20), et ledit au moins un élément de transmission de force de traction (31) est conçu pour transmettre des forces de traction en direction longitudinale (L) du dispositif d'absorption d'énergie (100), de sorte que la ligne d'action (W2) de la force de traction transmise via ledit au moins un élément de transmission de force de traction (31) s'étend entièrement à l'intérieur de l'élément de transmission de force de traction (31).

**2.** Dispositif d'absorption d'énergie selon la revendication 1, dans lequel ledit au moins un élément de transmission de force de traction (31) présente une rigidité à la flexion susceptible d'être préalablement déterminée.

**3.** Dispositif d'absorption d'énergie selon la revendication 1 ou 2, qui comprend au moins deux éléments de transmission de force de traction (31) qui s'étendent le long de différentes droite de liaison, et la résultante (R) des droites de liaison coïncide avec l'axe longitudinal (L) du dispositif d'absorption d'énergie (100).

**4.** Dispositif d'absorption d'énergie selon la revendication 3, dans lequel
la droite de liaison ou les droites de liaison, le long de laquelle s'étend ledit au moins un élément de transmission de force de traction (31) ou le long desquelles s'étendent lesdits au moins deux éléments de transmission de force de traction (31), est/sont disposée(s) en oblique par rapport à l'axe longitudinal (L) du dispositif d'absorption d'énergie (100).

**5.** Dispositif d'absorption d'énergie selon l'une des revendications précédentes, dans lequel l'élément d'absorption d'énergie (30) est conçu, jusqu'à une force de réaction susceptible d'être préalablement déterminée et caractéristique pour l'élément d'absorption d'énergie (30), pour transmettre des forces de compression en direction longitudinale (L) du dispositif d'absorption d'énergie (100), et la ligne d'action (W1) des forces de compression transmise via l'élément d'absorption d'énergie (30) s'étend, à l'exception de la zone de pliage ou de bombement (33, 33'), totalement à l'intérieur de la paroi de l'élément d'absorption d'énergie (30) réalisé sous forme de corps creux.

**6.** Dispositif d'absorption d'énergie selon l'une des revendications précédentes, dans lequel l'élément d'absorption d'énergie (30), réalisé sous forme de corps creux, présente une conformation qui va en se rétrécissant, de préférence une conformation qui va en se rétrécissant depuis la première plaque frontale (10) en direction de la seconde plaque frontale (20).

**7.** Dispositif d'absorption d'énergie selon l'une des revendications précédentes, dans lequel l'élément d'absorption d'énergie (30) réalisé sous forme de corps creux présente une conformation pourvue d'arêtes, en particulier une conformation semblable à un tronc de pyramide.

**8.** Dispositif d'absorption d'énergie selon la revendication 7, dans lequel au moins une arête et de préférence chaque arête (34) de l'élément d'absorption d'énergie (30) réalisé sous forme de corps creux présente une échancrure (35) qui est située au moins partiellement dans la zone de pliage ou de bombement (33).

**9.** Dispositif d'absorption d'énergie selon l'une des revendications précédentes, dans lequel la première plaque frontale (10) est réalisée sous la forme d'une première bride via laquelle le dispositif d'absorption d'énergie (100) peut être fixé, de préférence de manière détachable, sur le châssis principal d'une caisse de voiture d'un véhicule à plusieurs éléments, en particulier d'un véhicule ferroviaire, et dans lequel la seconde plaque frontale (20) est réalisée sous forme d'une seconde bride via laquelle au moins un élément structurel (50) placé avant le dispositif d'absorption d'énergie (100), comme par exemple un élément de transmission de force, un élément tampon ou un élément de protection antichoc supplémentaire, peut être relié de préférence de manière détachable avec le dispositif d'absorption d'énergie.

**10.** Procédé pour la réalisation d'un dispositif d'absorption d'énergie (100) selon l'une des revendications précédentes, ledit procédé comprenant les étapes suivantes :

a) préparation d'un corps creux (30) avec une conformation en arêtes, en particulier semblable à un tronc de pyramide ;
b) fixation d'une première plaque frontale (10) sur un premier côté frontal du corps creux (30) et d'une seconde plaque frontale (20) sur un second côté frontal opposé du corps creux (30) ;
c) formation d'une zone de pliage ou de bombement (33, 33') s'étendant en direction périphérique au moins partiellement autour de la périphérie du corps creux (30) ; et
d) fixation d'au moins un élément de transmission de force de traction (31) aussi bien sur la première plaque frontale (10) que sur la seconde plaque frontale (20) de telle manière que ledit au moins un élément de transmission de force de traction (31) se trouve sur la totalité de la longueur de l'élément de transmission de force de traction (31) entièrement sur une droite de liaison (W2) qui relie la première plaque frontale (10) à la seconde plaque frontale (20).

**11.** Procédé selon la revendication 10, dans lequel l'étape de procédé c) comprend en outre l'opération suivante :

application d'une contrainte de compression sur le corps creux (30) de telle manière qu'il se forme un bombement en direction périphérique au moins partiellement autour de la périphérie du corps creux (30) d'une manière définie transversalement à la sollicitation.

**12.** Procédé selon la revendication 11, dans lequel l'intensité de la contrainte de compression appliquée au corps creux (30) est choisie de telle façon que le bombement (33') s'établit avec une amplitude capable d'être déterminée.

**13.** Procédé selon l'une des revendications 10 à 12, qui comprend en outre, avant l'étape c), l'étape suivante :

fixation d'au moins un élément de traction (32', 32"), en particulier d'une bande de traction, sur la paroi du corps creux (30) à deux emplacements de fixation opposés (F) à l'intérieur ou à l'extérieur du corps creux (30), de telle façon que ledit au moins un élément de traction (32', 32") s'étend transversalement à la direction longitudinale (L) du corps creux (30),

dans lequel l'étape c) comporte en outre l'opération suivante :

avancée d'un manipulateur (40) à l'intérieur du corps de liaison (30) de telle façon que ledit au moins un élément de traction (32, 32") est rappelé de préférence au milieu et les deux emplacements de fixation opposés (L) de l'élément de traction (32', 32") sont déplacés en direction l'un de l'autre.

**14.** Procédé selon la revendication 13, dans lequel les deux emplacements de fixation opposés (F) sont situés à l'intérieur du corps creux (30), et ledit au moins un élément de traction (32', 32") prévu à l'intérieur du corps creux (30) est relié aux deux emplacements de fixation (F) avec la paroi extérieure du corps de liaison (30).

**15.** Procédé selon la revendication 13, dans lequel les deux emplacements de fixation opposée (F) sont situés à l'extérieur du corps creux (30), et dans lequel ledit au moins un élément de traction (32', 32"), prévu à l'intérieur du corps creux (30), est relié à la paroi extérieure du corps de liaison (30) de telle manière que ledit au moins un élément de traction (32', 32") passe depuis les éléments de fixation respectifs (F) à travers des ouvertures correspondantes prévues dans la paroi du corps creux (30).

**16.** Procédé selon l'une des revendications 13 à 15, dans lequel le manipulateur (40) à avancer à l'intérieur du corps creux (30) comprend un ergot qui, lors de l'avancée du manipulateur (40), passe à travers une ouverture correspondante (11, 21) dans la première ou la seconde plaque frontale (10, 20) par rapport au corps creux (30) en direction longitudinale (L) du corps creux (30) et vient buter au niveau d'une zone (M), dudit au moins un élément de traction (32', 32"), située entre les emplacements de fixation opposés (F).

**17.** Procédé selon l'une des revendications 13 à 16, qui comprend, après l'étape c) en outre l'opération consistant à enlever ledit au moins un élément de traction (32', 32") hors de l'intérieur du corps creux (30).

**18.** Procédé selon l'une des revendications 10 à 17, dans lequel l'amplitude de la zone de pliage ou de bombement (33, 33') réalisée dans l'étape c) et ainsi la force de réaction caractéristique pour l'élément d'absorption d'énergie (30), est réglable.

100

50

21

20

33

33

30

31

11

10

12

L, R

_Fig. 1_

*Fig. 2*

*Fig. 3a*

*Fig. 3b*

*Fig. 4a*

*Fig. 4b*

EP 2 125 476 B1

Fig. 5

Fig. 6

23

_Fig. 7_

_Fig. 8_

25

_Fig. 9a_

_Fig. 9b_

26

_Fig. 9c_

_Fig. 9d_

*Fig. 10*

**EP 2 125 476 B1**

**IN DER BESCHREIBUNG AUFGEFÜHRTE DOKUMENTE**

**In der Beschreibung aufgeführte Patentdokumente**

- WO 0005119 A1